(19) Europäisches Patentamt / European Patent Office / Office européen des brevets

(11) **EP 3 568 379 B1**

(12) **EUROPEAN PATENT SPECIFICATION**

(45) Date of publication and mention of the grant of the patent:
**10.03.2021 Bulletin 2021/10**

(51) Int Cl.:
***C03C 17/30*** (2006.01)    ***C09D 5/00*** (2006.01)
***C03C 17/25*** (2006.01)    ***C23C 18/12*** (2006.01)
***C03C 17/34*** (2006.01)

(21) Application number: **18701686.0**

(22) Date of filing: **16.01.2018**

(86) International application number:
**PCT/EP2018/050924**

(87) International publication number:
**WO 2018/130701 (19.07.2018 Gazette 2018/29)**

(54) **A BROADBAND ANTI-REFLECTIVE SOL-GEL COATING COMPOSITION**

BREITBANDIGE ANTIREFLEKTIVE SOL-GELBESCHICHTUNGSZUSAMMENSETZUNG

COMPOSITION DE REVÊTEMENT SOL-GEL ANTIREFLET À LARGE BANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2017 EP 17382016**

(43) Date of publication of application:
**20.11.2019 Bulletin 2019/47**

(73) Proprietor: **Fundación Tecnalia Research & Innovation**
**20009 Donostia-San Sebastian, Guipuzcoa (ES)**

(72) Inventors:
• **AGUSTIN SAENZ, Cecilia**
**20009 Donostia - San Sebastián (ES)**
• **ZUBILLAGA ALCORTA, Oihana**
**20009 Donostia - San Sebastián (ES)**
• **BRIZUELA PARRA, Marta**
**20009 Donostia - San Sebastián (ES)**

(74) Representative: **ZBM Patents - Zea, Barlocci & Markvardsen**
**Rambla Catalunya, 123**
**08008 Barcelona (ES)**

(56) References cited:
**WO-A1-2011/018590    US-A1- 2008 311 390**

**Description**

This application claims the benefit of the European Patent Application EP17382016.8 filed on January 16th, 2017.

The present invention relates to sol-gel coatings, particularly to silica-based sol-gel coating compositions useful for the preparation of single anti-reflective coatings on a substrate or broadband anti-reflective multi-layer stacks showing graded refractive index profile on a substrate. The present invention also relates to a process for the preparation of the anti-reflective sol-gel coating composition and to a process for the preparation of single anti-reflective coatings on a substrate or anti-reflective multi-layer stacks on a substrate.

BACKGROUND ART

Glass is extensively used in optical and optoelectronic applications such as lenses, screens, substrates for photodetectors, sensors and solar cells assemblies, due to its high optical transmission in a wide range of the solar spectrum, so as to its relatively low cost, thermal and mechanical stability. These features are the reason behind it is used on assembly systems whose application imply exposure to harsh environmental conditions (such as heat, ultraviolet radiation and corrosive media), and need protection and insulation such as photovoltaic modules.

However, although it exhibits high transparency, because of the difference between the refractive index of glass and medium, generally air, Fresnel reflection losses are produced in the interface, being up to 8% in solar spectrum range. Optical reflection is a phenomenon occurring when light propagates across a boundary between two media which have different refractive indexes. Broadband anti-reflection effect can be obtained by means of interference-type multi-layer stacks. This anti-reflection structure utilizes the light-matter interaction principles of thin film optics to produce destructive interference of the light reflected at the upper and the lower interfaces of the thin film/substrate system.

In order to achieve anti-reflection effect, total reflection of the anti-reflective system can be minimised by adjusting the refractive index and thickness of each layer thus producing the mentioned destructive interference of the light reflected on each interphase. Depending on the needs of optical performance, anti-reflective coating system may contain single or multiple layers; a single layer covers a narrow bandwidth while broadband optical performance can be achieved by multi-layer stack.

The required value of refractive index for the layers of this system (glass/air) is so low that no bulk materials can meet this criterion, thus some alternative must be implemented, like introducing voids into the material. Several techniques, as chemical etching, magnetron sputtering and "sol-gel" can be used for that purpose. "Sol-gel" process is a versatile method which permits precise control on the film microstructure, such as pore volume, pore size and surface area, besides being low cost method.

"Sol-gel" processes for the preparation of homogeneous high porosity coatings having a narrow pore size distribution have been disclosed in the state of the art. Particularly, those porous coatings have been prepared by sol-gel processes performed by the surfactant templating technique. This technique involves the synthesis of structured mesoporous solids based on the supramolecular templating approach, where long chain organic surfactants are used as structure-directing agents (SDA) or templates. The assembly of these surfactant molecules in the presence of a hard precursor leads to a composite mesostructure during the condensation of the silica network. The subsequent removal of the surfactant gives a mesoporous material with a porous systems replicating the surfactant's assembly.

Additionally, other properties like anti-soiling and durability properties are also a key issue to consider for outdoor applications, as the exposed surface should be capable of withstanding prolonged exposure in open air climates (including desert and tropical ones). When the surface is soiled, a significant part of the light can be scattered and thus, lost. In this sense, hydrophobic or water-repellent coatings can be used to prevent contamination and avoid water and fog condensation onto surface. Durability effects of the anti-reflective surface have to be considered when long-term high performance stability with no optical transmittance loss is needed. Thus, surface treatments combining durable anti-reflective and anti-soiling properties are of interest to fulfil multi-functional necessities related to outstanding optical performance exhibition in outdoor applications thus improving the efficiency of the system.

Therefore, from what is known in the art it is derived that there is still the need of providing a durable, anti-soiling, anti-reflective coatings or stacks with superior broadband optical properties. WO2011018590 relates to an item containing a substrate having a main surface coated with a mesoporous antistatic coating, said coating having a refractive index less than or equal to 1.5, and moreover relates to a silica matrix functionalized by hydrophobic ammonium groups. US2008311390 method for depositing sol-gel derived coatings on substrates to form coated substrates includes the steps of providing a first solution including at least one sol precursor and at least one solvent. A water comprising solution is added to the first solution to form a sol-gel.

## SUMMARY OF THE INVENTION

Inventors have provided an anti-reflective (AR) sol-gel coating composition comprising a specific mixture of components and which allows the preparation of a single anti-reflective coating or anti-reflective multi-layer stack on a substrate having enhanced anti-reflective properties over a broad wavelength range (broadband). The single anti-reflective sol-gel coating on a substrate or anti-reflective multi-layer stack on a substrate is obtainable by the deposition of the specific sol-gel coating compositions of the invention and the subsequent sintering of the coating or stack thus obtained. Inventors have also provided single anti-reflective and water-repellent coating on a substrate obtained in a single step having enhanced optical properties and also allows the preparation of anti-reflective and water-repellent multi-layer stacks.

Furthermore, inventors have found that by using the anti-reflective sol-gel coating composition of the invention, single anti-reflective coatings or anti-reflective multi-layer stacks having a good performance regarding durability of the anti-reflection properties is obtained.

Thus, a first aspect of the present invention relates to a process for preparing an anti-reflective sol-gel coating composition comprising: a) first mixing a hydrolysable silicon alkoxide, one or more $(C_1-C_8)$alcohols, an aqueous solution of at least one acid catalyst; and one or more surfactants of formula (II):

$$HO(CH_2CH_2O)_mR^9 \qquad (II)$$

then maintaining the resulting mixture at a temperature comprised from 50°C to 120°C for an appropriate period of time; and finally cooling the mixture until reaching a temperature comprised from 30°C to 50°C, wherein: $R^9$ is $(C_1-C_{30})$alkyl, and m is an integer selected from 2 to 40; the concentration of the surfactant of formula (II) in the resulting first mixture is comprised from 150 g/L to 300 g/L; the molar ratio between the hydrolysable silicon alkoxide and the aqueous solution of acid catalyst is comprised from 0.15 to 1; and the molar ratio between the hydrolysable silicon alkoxide and the $(C_1-C_8)$alcohol is comprised from 0.15 to 0.30, and the molar ratio between the hydrolysable silicon alkoxide and the surfactant of formula (II) is comprised from 7 to 11.5; b) preparing a second mixture by mixing one or more $(C_1-C_8)$alcohols, and an aqueous solution of at least one acid catalyst; and maintaining the resulting mixture at a temperature comprised from 15°C to 30°C; c) adding the second mixture obtained in step b) to the resulting mixture of step a); and maintaining the resulting mixture at a temperature comprised from 30°C to 50°C for an appropriate period of time; and d) cooling the resulting mixture obtained in step c) until reaching a temperature comprised from 15°C to 30°C; and adding one or more $(C_1-C_8)$alcohols until the molar ratio between the hydrolysable silicon alkoxide and the $(C_1-C_8)$alcohol in the anti-reflective sol-gel coating composition is comprised from 0.025 to 0.100, wherein: the concentration of the surfactant of formula (II) in the anti-reflective sol-gel coating composition is comprised from 55 g/L to 90 g/L, the molar ratio between the hydrolysable silicon alkoxide and the aqueous solution of at least one acid catalyst is comprised from 0.050 to 0.350, and the molar ratio between the hydrolysable silicon alkoxide and the surfactant of formula (II) is comprised from 7 to 11.5.

A second aspect of the present invention relates to the process as defined in the first aspect of the invention, wherein the process further comprises adding a silicon precursor having at least one non-hydrolysable substituent bonded to the silicon atom to the initial mixture of step a).

The third aspect of the invention relates to an anti-reflective sol-gel coating composition obtainable by the process as defined in the first aspect of the invention.

The fourth aspect of the invention relates to an anti-reflective water-repellent sol-gel coating composition obtainable by the process as defined in the second aspect of the invention.

The fifth aspect of the invention relates to a process for preparing a single anti-reflective coating on a substrate which comprises: e) depositing a mono-layer of the anti-reflective sol-gel coating composition as defined in the third aspect of the invention or alternatively, the anti-reflective water-repellent sol-gel coating composition as defined in the fourth aspect of the invention over the substrate; and f) sintering the coating obtained in step e). The sixth aspect of the invention relates to a process for preparing an anti-reflective multi-layer stack on a substrate which comprises: g) firstly, depositing a first inner layer over the substrate by a process which comprises: g1) providing a sol-gel coating composition obtainable by a process which comprises: g1a) first mixing an hydrolysable silicon alkoxide, one or more $C_1-C_8$ alcohols, and an aqueous solution of at least one acid catalyst; and then maintaining the resulting mixture at a temperature comprised from 50°C to 70°C for an appropriate period of time; and finally cooling the mixture until reaching a temperature comprised from 30°C to 50°C; g1b) preparing a second mixture by mixing one or more $C_1-C_8$ alcohols, and an aqueous solution of at least one acid catalyst; and maintaining the resulting mixture at a temperature comprised from 15°C to 30°C for an appropriate period of time; g1c) adding the second mixture obtained in step g1b) to the resulting mixture of step g1a); and maintaining the resulting mixture at a temperature comprised from 30°C to 50°C for an appropriate period of time; g2) depositing the sol-gel coating composition over the substrate; and g3) drying or sintering the coating obtained in step g2); and h) secondly, depositing an external anti-reflective layer over the inner layer on the substrate, by a process which comprises: h1) depositing the anti-reflective sol-gel coating composition as defined in the third aspect of the invention or alternatively, the anti-reflective water-repellent sol-gel coating composition as defined in the fourth aspect of the invention, over the inner layer on the substrate; and h2) sintering the coating obtained in step h1).

The seventh aspect of the invention relates to a single anti-reflective coating on a substrate or an anti-reflective multi-layer stack on a substrate obtainable by the process as defined in the fifth and the sixth aspect of the invention.

BRIEF DESCRIPTION OF DRAWINGS

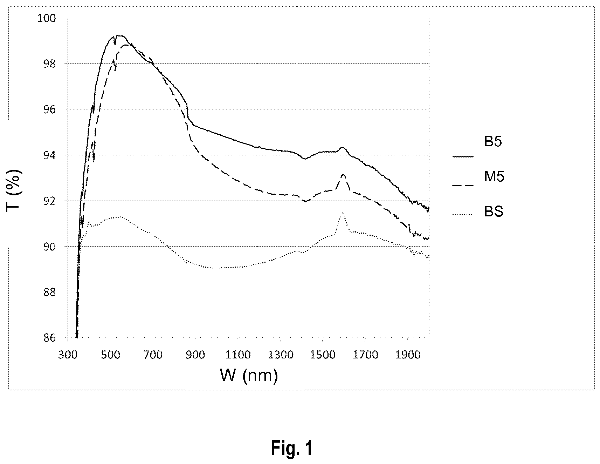

Fig. 1 shows the ultraviolet-visible-near infrared spectrophotometry of the single anti-reflective coating of Example M5 of the present invention onto low iron soda lime silica float glass (dashed line), the anti-reflective multi-layer (bi-layer) stack of Example B5 of the present invention onto low iron soda lime silica float glass (solid line), and bare substrate (BS) that is bare low iron soda lime silica float glass (pointed line). The spectrum expresses transmittance (T) in % versus wavelength (W) expressed in nm.

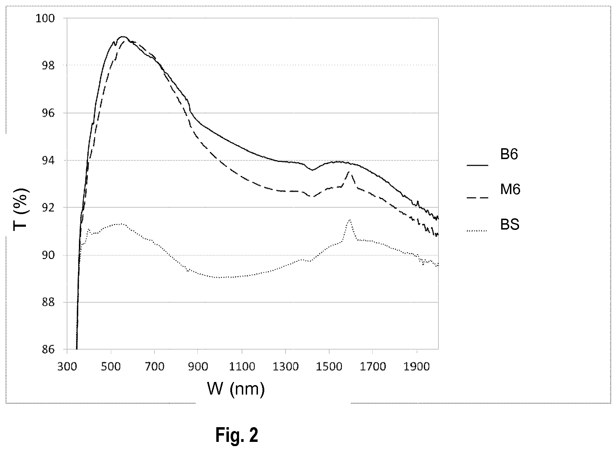

Fig. 2 shows the ultraviolet-visible-near infrared spectrophotometry of the single anti-reflective and water-repellent coating of Example M6 of the present invention onto low iron soda lime silica float glass (dashed line), the anti-reflective and water-repellent multi-layer (bi-layer) stack of Example B6 of the present invention onto low iron soda lime silica float glass (solid line), and bare substrate (BS) that is bare low iron soda lime silica float glass (pointed line). The spectrum expresses transmittance T in % versus wavelength (W) expressed in nm.

DETAILED DESCRIPTION OF THE INVENTION

All terms as used herein in this application, unless otherwise stated, shall be understood in their ordinary meaning as known in the state of the art. Other more specific definitions for certain terms as used in the present application are as set forth below and are intended to apply uniformly throughout the specification and claims unless an otherwise expressly set out definition provides a broader definition.

For purposes of the present invention, any ranges given include both the lower and the upper end-points of the range. Ranges given, such as temperatures, times, and the like, should be considered approximate, unless specifically stated.

The term "sol-gel" or "solution sol-gel" or "SSG" process have the same meaning and are used interchangeable. They refers to a chemical process that are used for the synthesis of single- or multiple-component materials, including glasses, in the form of thin solid films, ultrafine powders, high surface area porous materials, dense abrasive minerals, and continuous ceramic and glass fibres. In particular, a single "sol-gel" coating or a "sol-gel" multi-layer stack is prepared by a "sol-gel" process that involves the preparation of one or more precursor mixtures (also called "sol"), which are converted into intermediate product (also called "gel") and thereof into a specified material by a process that may involve chemical reactions, product forming, gelification, drying and sintering.

The term "sol" refers to either a dispersion of colloidal particles of one phase in a fluid medium or a solution prepared by hydrolysis and polycondensation of metalorganic derivatives compounds or inorganic salts in alcoholic solution. The term "gel" refers to a material consisting of a three-dimensional network of a solid phase interwoven with an entrapped and immobilized continuous liquid phase.

The term "sol-gel coating" refers to a coating obtainable by each of the "sol-gel" compositions that are defined along the document.

The term "anti-reflective" refers to a physical property provided by the sol-gel coating composition that permits to obtain surface with anti-reflection or high-transmission properties in comparison to bare substrate after depositing on a substrate; or to a physical property provided by single coating on a substrate or a multilayer stack on a substrate that provide anti-reflection or high-transmission properties in comparison to bare substrate.

The term "anti-reflective system" and "anti-reflective coating system" refers to a single coating or a coating sequence (stack) on a substrate that is composed by one or more layers obtainable by depositing the "sol-gel" coating composition of the present invention. Thus, the term "anti-reflective system" encompasses the term "anti-reflective coating" and the term "anti-reflective coating stack".

The terms "anti-reflective coating", "single anti-reflective coating" and "anti-reflective mono-layer" or "anti-reflective (mono-layer) coating" have the same meaning and are used interchangeable. They refer to a coating on a substrate that is composed by one layer obtainable by depositing the "sol-gel" coating composition of the present invention.

The terms "anti-reflective coating stack" and "anti-reflective multi-layer stack" have the same meaning and are used interchangeable. They refer to a coating sequence on a substrate that is composed by at least two coating or layers obtainable by depositing of "sol-gel" coating compositions, wherein at least one of the layers is formed by the deposition of a "sol-gel" coating composition of the present invention.

The term "anti-reflective bi-layer stack" refers to a specific case of "anti-reflective multi-layer stack". It refers to a coating sequence on a substrate that is composed by two coating or layers obtainable by depositing of "sol-gel" coating compositions, wherein at least one of the layers is formed by the deposition of a "sol-gel" coating composition of the present invention.

The term "broadband" refers to a wavelength range integrated in electromagnetic spectrum, particularly covering the most powerful part of sunlight wavelength range; more precisely the wavelength is comprised from 300 nm to 2000 nm.

The term "alkyl" refers to a saturated straight, or branched hydrocarbon chain which contains the number of carbon atoms specified in the description or claims. Examples include, among others, the group methyl, ethyl, propyl, isopropyl, butyl, isobutyl, sec-butyl, tert-butyl, n-pentyl, and n-hexyl.

The term "$(C_2-C_{14})$alkenyl" refers to a saturated straight or branched alkyl chain which contains from 2 to 14 carbon atoms and that also contains one or more double bonds. Examples include, among others, ethenyl, 1-propen-1-yl, 1-propen-2-yl, 3-propen-1-yl, 1-buten-1-yl, 1-buten-2-yl, 3-buten-1-yl, 3-buten-2-yl, 2-buten-1-yl, 2-buten-2-yl, 2-methyl-1-propen-1-yl, 2-methyl-2-propen-1-yl, 1,3-butadien-1-yl, 1,3-butadien-2-yl, and 2-hexenyl.

The term "$(C_2-C_{14})$alkynyl" refers a saturated straight or branched alkyl chain which contains from 2 to 14 carbon atoms and that also contains one or more triple bonds. Examples include, among others, ethynyl, 1-propynyl, 2-butynyl, 1,3-butadinyl, 4-pentynyl, and 1-hexynyl.

The term "$(C_5-C_6)$aryl" refers to a 5 to 6 membered ring, saturated, partially or totally unsaturated, optionally bridged or fused to a 5 to 6 membered ring; the members of the rings being independently selected from C, CH, $CH_2$, O, N, NH, and S; being one or more of the hydrogen atoms of the members optionally substituted by a radical selected from the group consisting of $(C_1-C_6)$alkyl, $(C_1-C_6)$haloalkyl, halogen, $(C_1-C_6)$alkoxy, $(C_1-C_6)$alkylcarbonyl, (C1-C6)alkyloxycarbonyl, nitro and cyano.

The term "fluoro-$(C_1-C_{14})$alkyl" refers to a saturated straight, or branched hydrocarbon wherein at least one hydrogen atom is substituted by a fluorine atom and which contains from 1 to 14 carbon atoms. Examples include, among others, the group trifluoromethyl/perfluoromethyl, perfluoroethyl, perfluoropropyl, perfluoroisopropyl, perfluorosbutyl, perfluoroisobutyl, perfluoro-sec-butyl, perfluoro-tert-butyl, perfluoro-n-pentyl, perfluoro-hexyl, perfluoro-octyl, perfluoro-dodecyl perfluoro-decyl.

The term "fluoro-$(C_2-C_{14})$alkenyl" refers to a saturated straight, or branched alkyl chain which contains from 2 to 14 carbon atoms and that also contains one or more double bonds, wherein at least one hydrogen atom is substituted by a fluorine atom. Examples include, among others, perfluorovinyl ($CF_2$=CF), monofluorovinyl, 2,2-difluorovinyl ($CF_2$=CH), perfluoroallyl ($CF_3CF_2$=CF), perfluoro-1-butenyl, perfluoro-2-butenyl, 1,1-ditrifluoromethyl-2-fluorovinyl (($CF_3)_2$C=$CF_2$), perfluoropentenyl and perfluorohexenyl.

The term "fluoro-$(C_2-C_{14})$alkynyl" refers a saturated straight, or branched alkyl chain which contains from 2 to 14 carbon atoms and that also contains one or more triple bonds, wherein at least one hydrogen atom is substituted by a fluorine atom.

The term "fluoro-$(C_5-C_6)$aryl" refers to a 5 to 6 membered ring, saturated, partially or totally unsaturated, optionally bridged or fused to a 5 to 6 membered ring, wherein at least one hydrogen atom is substituted by a fluorine atom; the members of the rings being independently selected from C, CH, $CH_2$, O, N, NH, and S; being one or more of the hydrogen atoms of the members optionally substituted by a radical selected from the group consisting of $(C_1-C_6)$alkyl, $(C_1-C_6)$haloalkyl, halogen, $(C_1-C_6)$alkoxy, $(C_1-C_6)$alkylcarbonyl, (C1-C6)alkyloxycarbonyl, nitro and cyano.

The term "halogen" refers to fluorine, chlorine, bromine and iodine.

The term "molar ratio" refers to the relation of mols between the different components of the anti-reflective coating compositions, the single anti-reflective coating on a substrate or the anti-reflective multi-layer stack of the present invention. For example, the relation of mols between the components intervening in the preparation of the first mixture (step a); or the relation of mols between the hydrolysable silicon alkoxide and the aqueous solution of the acid catalyst.

The term "glass" refers to a non-crystalline amorphous solid that is often transparent. The term "glass" is often defined in a broader sense, encompassing every solid that possesses a non-crystalline structure at the atomic scale and that exhibits a glass transition when heated towards the liquid state. In any case, the term "glass" encompasses the terms "silica glass" and "oxide glass". In particular, the term "silica glass" refers to any silica-based glass and combination thereof known in the state of the art. And, the term "oxide glass" refers to a glass that comprises oxide selected from the group consisting of Aluminum oxide, Antimony trioxide, Arsenic trioxide, Barium oxide, Bismuth(III) oxide, Boron trioxide, Calcium oxide, Cerium(III) oxide, Chromium(III) oxide, Gadolinium oxide, Germanium oxide, Iron(III) oxide, Lanthanum oxide, Lead(II) oxide, Lithium oxide, Magnesium oxide, Niobium pentoxide, Phosphorus pentoxide, Potassium oxide, Silicon dioxide, Sodium oxide, Strontium oxide, Sulphur dioxide, Tin dioxide, Titanium dioxide, Zinc oxide, Zirconium dioxide and combination therefore.

For the purposes of the invention the expressions "obtainable", "obtained" and equivalent expressions are used interchangeably, and in any case, the expression "obtainable" encompasses the expression "obtained".

As mentioned above, an aspect of the present invention refers to a process for preparing a single anti-reflective sol-gel coating composition useful for the preparation of anti-reflective coating on a substrate or anti-reflective multi-layer stacks on a substrate having durable anti-reflective properties over a broad wavelength band obtainable by a process which comprises preparing a first mixture (step a). As it is disclosed above, step a) comprises first mixing a hydrolysable silicon alkoxide, one or more $C_1$-$C_8$ alcohols, an aqueous solution of at least one acid catalyst; and one or more surfactants of formula (II)

$$HO(CH_2CH_2O)_mR^9 \qquad (II)$$

then maintaining the resulting mixture at a temperature comprised from 50°C to 120°C for an appropriate period of time; and finally cooling the mixture until reaching a temperature comprised from 30°C to 50°C wherein: $R^9$ is $(C_1$-$C_{30})$alkyl, and m is an integer selected from 2 to 40; the concentration of the surfactant of formula (II) in the resulting first mixture is comprised from 150 g/L to 300 g/L; the molar ratio between the hydrolysable silicon alkoxide and the aqueous solution of acid catalyst is comprised from 0.15 to 1; and the molar ratio between the hydrolysable silicon alkoxide and the $(C_1$-$C_8)$alcohol is comprised from 0.15 to 0.30, and the molar ratio between the hydrolysable silicon alkoxide and the surfactant of formula (II) is comprised from 7 to 11.5.

In an embodiment, optionally in combination with one or more features of the various embodiments described above or below, the hydrolysable silicon alkoxide is selected from the group consisting of:

i) a totally hydrolysable silicon alkoxide of formula (IA)

$$Si(OR^1)(OR^2)(OR^3)(OR^4) \qquad (IA)$$

ii) an alkylalkoxide having at least one non-hydrolysable substituent being the non-hydrolysable substituent a substituted or un-substituted $(C_1$-$C_4)$alkyl of formula (IB)

$$R^8\text{-}Si(OR^5)(OR^6)(OR^7) \qquad (IB)$$

and iii) a mixture of at least a totally hydrolysable silicon alkoxide of formula (IA) and at least an alkylalkoxide having at least one non-hydrolysable substituent being the non-hydrolysable substituent a substituted or unsubstituted $(C_1$-$C_4)$alkyl of formula (IB); wherein: each one of $R^1$, $R^2$, $R^3$, $R^4$, $R^5$, $R^6$ and $R^7$ are independently selected from the group consisting of a substituted or un-substituted $(C_1$-$C_{14})$alkyl, $(C_5$-$C_6)$aryl, $(C_2$-$C_{14})$alkenyl and $(C_2$-$C_{14})$alkynyl group; and $R^8$ is a substituted or un-substituted $(C_1$-$C_4)$alkyl.

In an embodiment, optionally in combination with one or more features of the various embodiments described above or below, the hydrolysable silicon alkoxide is a totally hydrolysable silicon alkoxide of formula (IA);

$$Si(OR^1)(OR^2)(OR^3)(OR^4) \qquad (IA)$$

wherein $R^1$, $R^2$, $R^3$ and $R^4$ are as defined in the present invention. In an embodiment, optionally in combination with one or more features of the various embodiments described above or below, the hydrolysable silicon alkoxide is a totally hydrolysable silicon alkoxide of formula (IA) selected from the group consisting of tetraethylorthosilicate (TEOS), tetramethylorthosilicate (TMOS), and mixtures thereof; preferably tetraethylorthosilicate (TEOS).

In an embodiment, optionally in combination with one or more features of the various embodiments described above or below, the hydrolysable silicon alkoxide is an alkylalkoxide having at least one non-hydrolysable substituent being the non-hydrolysable substituent a substituted or un-substituted $(C_1$-$C_4)$alkyl of formula (IB);

$$R^8\text{-}Si(OR^5)(OR^6)(OR^7) \qquad (IB)$$

wherein $R^5$, $R^6$, $R^7$ and $R^8$ are as defined in the present invention. In an embodiment, optionally in combination with one or more features of the various embodiments described above or below, the hydrolysable silicon alkoxide is an alkylalkoxide having at least one non-hydrolysable substituent being the non-hydrolysable substituent a substituted or un-substituted $(C_1$-$C_4)$alkyl of formula (IB) selected from the group consisting of methyl triethoxysilane (MTES), methyl trimethoxysilane (MTMS), and mixture thereof; preferably methyl triethoxysilane (MTES).

In an embodiment, optionally in combination with one or more features of the various embodiments described above or below, the hydrolysable silicon alkoxide is a mixture of at least a totally hydrolysable silicon alkoxide of formula (IA) and at least an alkylalkoxide having at least one non-hydrolysable substituent being the non-hydrolysable substituent a substituted or un-substituted $(C_1$-$C_4)$alkyl of formula (IB) as defined in the present invention. In an embodiment, optionally in combination with one or more features of the various embodiments described above or below, the hydrolysable silicon alkoxide is a mixture of a totally hydrolysable silicon alkoxide of formula (IA) selected from the group consisting of tetraethylorthosilicate (TEOS), tetramethylorthosilicate (TMOS) and mixtures thereof; and an alkylalkoxide having at least one non-hydrolysable substituent being the non-hydrolysable substituent a substituted or un-substituted $(C_1-C_4)$alkyl of formula (IB) selected from the group consisting of methyl triethoxysilane (MTES), methyl trimethoxysilane (MTMS) and mixtures thereof; preferably a mixture of tetraethylorthosilicate (TEOS) and methyl triethoxysilane (MTES).

In an embodiment, optionally in combination with one or more features of the various embodiments described above or below, the $C_1-C_8$ alcohols used in step a) is selected from the group consisting of ethanol, butanol, propanol, and mixtures thereof. The term "alcohol" refers to an "alkane" wherein at least one hydrogen atom is substituted by a hydroxyl group and which contains the number of carbon atoms specified in the description or claims. The term "alkane" refers to a saturated, branched or linear hydrocarbon which contains the number of carbon atoms specified in the description or claims. Examples include methanol, ethanol, n-propanol, isopropanol, butanol, iso-butanol, and sec-butanol. In an embodiment, optionally in combination with one or more features of the various embodiments described above or below, the $C_1-C_8$ alcohol is ethanol. In an embodiment, optionally in combination with one or more features of the various embodiments described above or below, the molar ratio between the hydrolysable silicon alkoxide and the $C_1-C_8$ alcohol, preferably ethanol, in the anti-reflective sol-gel coating composition is comprised from 0.15 to 0.30; preferably comprised from 0.15 to 0.20.

In an embodiment, optionally in combination with one or more features of the various embodiments described above or below, the acid catalyst is an inorganic acid independently selected from the group consisting of $H_2SO_4$, HCl, $HNO_3$, and mixtures thereof; preferably the acid catalyst is HCl. The acid catalyst is in form of an aqueous solution having a pH lower than 5; preferably having a pH comprised from 0 to 3. In an embodiment, the acid catalyst is HCl and is in form of an aqueous solution of HCl 0.1M having a pH lower than 5; preferably having a pH comprised from 0 to 3. In an embodiment, optionally in combination with one or more features of the various embodiments described above or below, the molar ratio between the hydrolysable silicon alkoxide and the aqueous solution of the acid catalyst is comprised from 0.15 to 1; preferably is comprised from 0.35 to 0.75. In a particular embodiment, optionally in combination with one or more features of the various embodiments described above or below, the molar ratio between the hydrolysable silicon alkoxide and the aqueous solution of HCl 0.1M is comprised from 0.15 to 1; preferably comprised from 0.35 to 0.75.

The mixture of step a) also comprises one or more surfactants of formula (II):

$$HO(CH_2CH_2O)_mR^9 \qquad (II)$$

wherein $R^9$ is $(C_1-C_{30})$alkyl, and m is an integer selected from 2 to 40. In an embodiment, the compound of formula (II) is one wherein $R^9$ is $(C_1-C_{25})$alkyl and m is an integer selected from 10 to 30; preferably $R^9$ is $(C_1-C_{25})$alkyl and m is an integer selected from 10 to 20.

In an embodiment, optionally in combination with one or more features of the various embodiments described above or below, the surfactant of formula (II) is selected from the group consisting of polyethylene (20) oxide hexadecyl ether (Brij58), polyethylene (20) oxide octadecyl ether (Brij78), polyethylene (10) oxide hexadecyl ether (Brij56), polyethylene (30) oxide dodecyl ether (Brij35), polyethylene (4) oxide dodecyl ether (Brij30), polyethylene (2) oxide octadecyl ether (Brij93) and mixture thereof; preferably the surfactant of formula (II) is polyethylene (20) oxide hexadecyl ether (Brij 58). Particularly, the terms "Brij 58", "polyethylene (20) oxide hexadecyl ether" and "$PEO_{20}C_{16}$" have the same meaning and are used interchangeable. Brij58 refers to a registered trademark of an Atlas Chemicals of Wilmington Delaware's compound of formula $HO(CH_2CH_2O)_{20}C_{16}H_{33}$ and having the CAS number 9004-95-9.

In an embodiment, optionally in combination with one or more features of the various embodiments described above or below, the concentration in the resulting first mixture of the surfactant of formula (II) of the invention, preferably polyethylene (20) oxide hexadecyl ether, is comprised from 150 g/L to 300 g/L; preferably comprised from 155 g/L to 280 g/L; more preferably comprised from 205 g/L to 240 g/L.

In an embodiment, optionally in combination with one or more features of the various embodiments described above or below, in step a) the molar ratio between the hydrolysable silicon alkoxide and the aqueous solution of at least one acid catalyst is comprised from 0.15 to 1; the molar ratio between the hydrolysable silicon alkoxide and the $C_1-C_8$ alcohol is comprised from 0.15 to 0.30; and the molar ratio between the hydrolysable silicon alkoxide and the surfactant of formula (II), preferably polyethylene (20) oxide hexadecyl ether, is comprised from 7 to 11.5.

In an embodiment, optionally in combination with one or more features of the various embodiments described above or below, in step a) the molar ratio between the hydrolysable silicon alkoxide and the aqueous solution of at least one acid catalyst is comprised from 0.35 to 0.75; the molar ratio between the hydrolysable silicon alkoxide and the $C_1-C_8$ alcohol is comprised from 0.15 to 0.20; and the molar ratio between the hydrolysable silicon alkoxide and the surfactant of formula (II), preferably polyethylene (20) oxide hexadecyl ether, is comprised from 8 to 9.5.

In an embodiment, optionally in combination with one or more features of the various embodiments described above or below, in step a) the molar ratio of the hydrolysable silicon alkoxide, the aqueous solution of at least one acid catalyst, the $C_1-C_8$ alcohol and the surfactant of formula (II), preferably polyethylene (20) oxide hexadecyl ether, is 1:2.7:6.1:0.12.

In an embodiment, optionally in combination with one or more features of the various embodiments described above or below, in step a) the resulting mixture is maintaining under stirring at a temperature comprised from 50°C to 120°C for an appropriate period of time and finally cooling the mixture until reaching a temperature comprised from 30°C to 50°C. In an embodiment, optionally in combination with one or more features of the various embodiments described above or below, in step a) the resulting mixture is maintaining under stirring at a temperature comprised from 50°C and 85°C for a period of time comprised from 70 min to 120 min.

In an embodiment, optionally in combination with one or more features of the various embodiments described above or below, step a) is performed wherein the hydrolysable silicon alkoxide is tetraethylorthosilicate (TEOS), the $C_1$-$C_8$ alcohol is ethanol; the aqueous solution of at least one acid catalyst is an aqueous solution of HCl, the compound of formula (II) is polyethylene (20) oxide hexadecyl ether, and the concentration of polyethylene (20) oxide hexadecyl ether in the first mixture is comprised from 150 g/L to 300 g/L; and step a) is performed by maintaining the mixture at a temperature comprised from 50°C and 85°C for a period of time comprised from 70 min to 120 min; and finally, cooling the mixture until reaching a temperature comprised from 30°C to 50°C.

As it is disclosed above, the process of the first aspect of the invention comprises preparing also a second mixture (step b) by a process which comprises mixing one or more $C_1$-$C_8$ alcohols, and an aqueous solution of at least one acid catalyst; and maintaining the resulting mixture at a temperature comprised from 15°C to 30°C for an appropriate period of time, preferably for a period of time comprised from 5 min to 30 min.

All the embodiments disclosed above for step a) in relation to the ($C_1$-$C_8$)alcohols, and the aqueous solution of at least one acid catalyst also applies for step b) of the process of the first aspect of the invention.

In an embodiment, optionally in combination with one or more features of the various embodiments described above or below, step b) is performed wherein ($C_1$-$C_8$)alcohol is ethanol, and the aqueous solution of at least one acid catalyst is an aqueous solution of HCl; particularly HCl 0.1M. In an embodiment, the acid catalyst is in form of an aqueous solution having a pH lower than 5; preferably comprised from 0 to 3.

In an embodiment, optionally in combination with one or more features of the various embodiments described above or below, in step b) the resulting mixture is maintained at a temperature comprised from 15°C to 30°C; preferably for a period of time comprised from 5 min to 30 min.

In a particular embodiment, optionally in combination with one or more features of the various embodiments described above or below, in step b) the ($C_1$-$C_8$)alcohol is ethanol, and the aqueous solution of at least one acid catalyst is an aqueous solution of HCl; particularly an aqueous solution of HCl 0.1M, and the resultant mixture is maintained at a temperature comprised from 15°C to 30°C for a period of time comprised from 5 min to 30 min.

As it is disclosed above the process of the first aspect of the invention also comprises performing step c) which comprises adding the second mixture obtained in step b) to the resulting mixture of step a); and maintaining the resulting mixture at a temperature comprised from 30°C to 50°C for an appropriate period of time; preferably comprised from 50 min to 90 min and d) cooling the resulting mixture obtained in step c) until reaching a temperature comprised from 15°C to 30°C; and adding one or more ($C_1$-$C_8$)alcohols until the molar ratio between the hydrolysable silicon alkoxide and the ($C_1$-$C_8$)alcohol is comprised from 0.025 to 0.100; wherein: the concentration in the anti-reflective sol-gel coating composition of the surfactant of formula (II) as defined above, preferably polyethylene (20) oxide hexadecyl ether is comprised from 55 g/L to 90 g/L; the molar ratio between the hydrolysable silicon alkoxide and the aqueous solution of the at least one acid catalyst is comprised from 0.050 to 0.350, and the molar ratio between the hydrolysable silicon alkoxide and the surfactant of formula (II) as defined above, preferably polyethylene (20) oxide hexadecyl ether, is comprised from 7 to 11.5.

In an embodiment, optionally in combination with one or more features of the various embodiments described above or below, the process of the first aspect of the invention also comprises performing step c) which comprises adding the second mixture obtained in step b) to the resulting mixture of step a); and maintaining the resulting mixture at a temperature comprised from 30°C to 50°C for an appropriate period of time; preferably comprised from 50 min to 90 min and d) cooling the resulting mixture obtained in step c) until reaching a temperature comprised from 15°C to 30°C; and adding one or more ($C_1$-$C_8$)alcohols until the molar ratio between the hydrolysable silicon alkoxide and the ($C_1$-$C_8$)alcohol is comprised from 0.025 to 0.050; wherein: the concentration in the anti-reflective sol-gel coating composition of the surfactant of formula (II) as defined above, preferably polyethylene (20) oxide hexadecyl ether is comprised from 55 g/L to 90 g/L; and the molar ratio between the hydrolysable silicon alkoxide and the aqueous solution of the at least one acid catalyst is comprised from 0.125 to 0.250, and the molar ratio between the hydrolysable silicon alkoxide and the surfactant of formula (II) as defined above, preferably polyethylene (20) oxide hexadecyl ether, is comprised from 8 to 9.5. In an embodiment, optionally in combination with one or more features of the various embodiments described above or below, the molar ratios of the hydrolysable silicon alkoxide, the aqueous solution of the at least one acid catalyst, the ($C_1$-$C_8$)alcohols and the surfactant of formula (II) as defined above, preferably polyethylene (20) oxide hexadecyl ether, is 1:8:24.4:0.12 for anti-reflective sol-gel coating composition of the third aspect of the invention and the molar ratios of the hydrolysable silicon alkoxide, the aqueous solution of the at least one acid catalyst, the ($C_1$-$C_8$)alcohols and the surfactant of formula (II) as defined above, preferably polyethylene (20) oxide hexadecyl ether, is 1:8:34:0.12 for anti-reflective and water-repellent sol-gel coating composition of the fourth aspect of the invention.

All the embodiments disclosed above for steps a) and b) in relation to the (C$_1$-C$_8$)alcohols also apply for step c) of the process of the first aspect of the invention.

In an embodiment, optionally in combination with one or more features of the various embodiments described above or below, in step d) the resulting mixture obtained in step c) is cooled until a temperature comprised from 15°C to 30°C; particularly until reaching room temperature; and adding one or more (C$_1$-C$_8$)alcohols as defined above until the molar ratio between the hydrolysable silicon alkoxide and the (C$_1$-C$_8$)alcohol is comprised from 0.025 to 0.100; preferably comprised from 0.025 to 0.050. For the purpose of the present invention, the term "room temperature" refers to a temperature comprised from 20°C to 25°C.

All the embodiments disclosed above for steps a) and b) in relation to the (C$_1$-C$_8$)alcohols also apply for step d) of the process of the first aspect of the invention. In an embodiment, optionally in combination with one or more features of the various embodiments described above or below, step d) is performed by cooling the resulting mixture obtained in step c) until a temperature comprised from 20°C to 25°C; and adding ethanol until the molar ratio between the hydrolysable silicon alkoxide and the ethanol is comprised from 0.025 to 0.100, preferably comprised from 0.025 to 0.050.

In an embodiment, optionally in combination with one or more features of the various embodiments described above or below, the process for preparing an antireflective sol-gel coating composition comprises: a) first mixing tetraethylorthosilicate (TEOS), ethanol, an aqueous solution of HCl; and polyethylene (20) oxide hexadecyl ether; then maintaining the resulting mixture at a temperature comprised from 50°C and 85°C for a period of time comprised from 70 min to 120 min and finally cooling the mixture until reaching a temperature comprised from 30°C to 50°C wherein: the concentration of polyethylene (20) oxide hexadecyl ether in the resulting first mixture is comprised from 150 g/L to 300 g/L preferably 155 g/L to 280 g/L, preferably comprised from 205 g/L to 240 g/L; and the molar ratio between the hydrolysable silicon alkoxide and the acid catalyst is comprised from 0.15 to 1; the molar ratio between the hydrolysable silicon alkoxide and the (C$_1$-C$_8$)alcohol is comprised from 0.15 to 0.30, and the molar ratio between the hydrolysable silicon alkoxide and the polyethylene (20) oxide hexadecyl ether is comprised from 7 to 11.5; b) preparing a second mixture by mixing ethanol, and an aqueous solution of HCl; and maintaining the resulting mixture at a temperature comprised from 15°C to 30°C; preferably for a period of time comprised from 5 min to 30 min; c) adding the second mixture obtained in step b) to the resulting mixture of step a); and maintaining the resulting mixture at a temperature comprised from 20°C to 60°C for a period of time comprised from 50 min to 90 min; d) cooling the resulting mixture obtained in step c); and adding ethanol until the molar ratio between the hydrolysable silicon alkoxide and the ethanol is comprised from 0.025 to 0.100; wherein: the concentration of polyethylene (20) oxide hexadecyl ether in the anti-reflective sol-gel coating composition is comprised from 55 g/L to 90 g/L; the molar ratio between the hydrolysable silicon alkoxide and the acid catalyst is comprised from 0.050 to 0.350 preferably comprised from 0.125 to 0.250, and the molar ratio between the hydrolysable silicon alkoxide and the polyethylene (20) oxide hexadecyl ether is comprised from 7 to 11.5 preferably comprised from 8 to 9.5.

In a particular embodiment, optionally in combination with one or more features of the various embodiments described above or below, the process for preparing an antireflective sol-gel coating composition comprises: a) first mixing tetraethylorthosilicate (TEOS), ethanol, an aqueous solution of HCl; and polyethylene (20) oxide hexadecyl ether; then maintaining the resulting mixture at a temperature comprised from 60°C to 85°C for a period of time of 90 min and finally cooling the mixture until reaching a temperature of 40°C wherein: the concentration of polyethylene (20) oxide hexadecyl ether in the resulting first mixture is comprised from 150 g/L to 300 g/L; and the molar ratio between the hydrolysable silicon alkoxide and the acid catalyst is comprised from 0.15 to 1; the molar ratio between the hydrolysable silicon alkoxide and the (C$_1$-C$_8$)alcohol is comprised from 0.15 to 0.30, and the molar ratio between the hydrolysable silicon alkoxide and the polyethylene (20) oxide hexadecyl ether is comprised from 7 to 11.5; b) preparing a second mixture by mixing ethanol, and an aqueous acidic solution of HCl; and maintaining the resulting mixture at room temperature for 10 min; c) adding the second mixture obtained in step b) to the resulting mixture of step a); and maintaining the resulting mixture at 40°C for 60 min; d) cooling the resulting mixture obtained in step c) until reaching a temperature comprised from 15°C to 30°C; and adding ethanol until the molar ratio between the hydrolysable silicon alkoxide and the ethanol is comprised from 0.025 to 0.100, preferably comprised from 0.025 to 0.05; wherein the concentration of polyethylene (20) oxide hexadecyl ether in the resulting first mixture is comprised from 55 g/L to 90 g/L; preferably 75 g/L to 90 g/L; and the molar ratio between the hydrolysable silicon alkoxide and the acid catalyst is comprised from 0.050 to 0.350, preferably comprised from 0.125 to 0.250; and the molar ratio between the hydrolysable silicon alkoxide and the polyethylene (20) oxide hexadecyl ether is comprised from 7 to 11.5; preferably comprised from 8 to 9.5.

In an embodiment, optionally in combination with one or more features of the various embodiments described above or below, the process for preparing an antireflective sol-gel coating composition comprises: a) first mixing tetraethylorthosilicate (TEOS), ethanol, an aqueous solution of HCl; and polyethylene (20) oxide hexadecyl ether; then maintaining the resulting mixture at a temperature comprised from 50°C and 85°C for a period of time comprised from 70 min to 120 min and finally cooling the mixture until reaching a temperature comprised from 30°C to 50°C wherein:

the concentration of polyethylene (20) oxide hexadecyl ether in the resulting first mixture is comprised from 150 g/L to 300 g/L preferably 155 g/L to 280 g/L, preferably comprised from 205 g/L to 240 g/L; and the molar ratio between the hydrolysable silicon alkoxide and the acid catalyst is comprised from 0.15 to 1; the molar ratio between the hydrolysable silicon alkoxide and the $(C_1-C_8)$alcohol is comprised from 0.15 to 0.30, and the molar ratio between the hydrolysable silicon alkoxide and the polyethylene (20) oxide hexadecyl ether is comprised from 7 to 11.5; b) preparing a second mixture by mixing ethanol, and an aqueous solution of HCl; and maintaining the resulting mixture at a temperature comprised from 15°C to 30°C; preferably for a period of time comprised from 5 min to 30 min; c) adding the second mixture obtained in step b) to the resulting mixture of step a); and maintaining the resulting mixture at a temperature comprised from 20°C to 60°C for a period of time comprised from 50 min to 90 min; d) cooling the resulting mixture obtained in step c); and adding ethanol until the molar ratio between the hydrolysable silicon alkoxide and the ethanol is comprised from 0.025 to 0.100; wherein: the concentration of polyethylene (20) oxide hexadecyl ether in the anti-reflective sol-gel coating composition is comprised from 55 g/L to 90 g/L; the molar ratio between the hydrolysable silicon alkoxide and the ethanol is comprised from 0.025 to 0.050; the molar ratio between the hydrolysable silicon alkoxide and the acid catalyst is comprised from 0.125 to 0.250; and the molar ratio between the hydrolysable silicon alkoxide and the polyethylene (20) oxide hexadecyl ether is comprised from 8 to 9.5. More preferably, the molar ratio between the hydrolysable silicon alkoxide, the acid catalyst, the $(C_1-C_8)$alcohol, and the polyethylene (20) oxide hexadecyl ether is 1:8:24.4:0.12 for anti-reflective sol-gel coating composition.

The second aspect of the invention relates to a process for preparing an antireflective sol-gel water-repellent coating composition which comprises performing the process as defined in the first aspect of the invention and further comprises adding a silicon precursor having at least one non-hydrolysable substituent bonded to the silicon atom to the initial mixture of step a). The silicon precursor having at least one non-hydrolysable substituent bonded to the silicon atom allows obtaining water-repellent surfaces. Thus, step a) of the process of the first aspect of the invention comprises a) first mixing an hydrolysable silicon alkoxide, one or more $(C_1-C_8)$alcohols, an aqueous solution of at least one acid catalyst, one or more surfactants of formula (II) as defined above, preferably polyethylene (20) oxide hexadecyl ether, and silicon precursor having at least one non-hydrolysable substituent bonded to the silicon atom, then maintaining the resulting mixture at a temperature comprised from 50°C to 120°C for an appropriate period of time; preferably comprised from 70°C to 90°C; and finally cooling the mixture until reaching a temperature comprised from 30°C to 50°C; wherein: the concentration of the surfactant of formula (II) as defined above, preferably polyethylene (20) oxide hexadecyl ether, is comprised from 150 g/L to 300 g/L; and the molar ratio between the hydrolysable silicon alkoxide and the aqueous solution of at least one acid catalyst is comprised from 0.15 to 1; the molar ratio between the hydrolysable silicon alkoxide and the $(C_1-C_8)$alcohol is comprised from 0.15 to 0.30; the molar ratio between the hydrolysable silicon alkoxide and the surfactant of formula (II) as defined above, preferably polyethylene (20) oxide hexadecyl ether, is comprised from 7 to 11.5, and the molar ratio between the hydrolysable silicon alkoxide and the silicon precursor having at least one non-hydrolysable substituent bonded to the silicon is comprised from 50 to 150. This process is advantageous because in a single process it is possible to obtain a sol-gel coating with water-repellence properties without detrimental effect on the anti-reflection properties.

In an embodiment, optionally in combination with one or more features of the various embodiments described above or below, the silicon precursor having at least one non-hydrolysable substituent bonded to the silicon atom is a compound of formula (III):

$$[CF_3\text{-}(CF_2)_n(CH_2)_m]_a\text{-}Si(OR^{10})_b \qquad \text{(III)}$$

wherein each $R^{10}$ is independently selected from the group consisting of $(C_1-C_{20})$alkyl, $(C_2-C_{20})$alkenyl and $(C_2-C_{20})$alkyl-CH=CH-; m and n are independently an integer comprised from 0 to 20, a is an integer selected from 1, 2 and 3; b is an integer selected from 1, 2, and 3; and the sum of a+b is 4; or alternatively a compound of formula (IV):

$$[CF_3\text{-}(CF_2)_n(CH_2)_m]_a\text{-}SiX_b \qquad \text{(IV)}$$

wherein each X is an halogen independently selected from the group consisting of chlorine, bromine and iodine; m and n are independently an integer comprised from 0 to 20, a is an integer selected from 1, 2 and 3; b is an integer selected from 1, 2, and 3; and the sum of a+b is 4; or alternatively
a compound of formula (V)

$$(R^{11})_a Si(OR^{12})_b \qquad \text{(V)}$$

wherein each $R^{11}$ and each $R^{12}$ is independently selected from the group consisting of $(C_1-C_{20})$alkyl, $(C_2-C_{20})$alkenyl and $(C_2-C_{20})$alkyl-CH=CH-; a is an integer selected from 1, 2 and 3; b is an integer selected from 1, 2, and 3; and the sum of a+b is 4; or alternatively

a compound of formula (VI)

$$[CH_3\text{-}(CH_2)_m]_a\text{-}SiX_b \qquad (VI)$$

wherein each X is an halogen independently selected from the group consisting of chlorine, bromine and iodine; m is an integer comprised from 0 to 20, a is an integer selected from 1, 2 and 3; b is an integer selected from 1, 2, and 3; and the sum of a+b is 4.

In an embodiment, optionally in combination with one or more features of the various embodiments described above or below, the silicon precursor having at least one non-hydrolysable substituent bonded to the silicon atom is a compound of formula (III-A):

$$CF_3\text{-}(CF_2)_n(CH_2)_m\text{-}Si(OR^{13})(OR^{14})(OR^{15}) \qquad (III\text{-}A)$$

wherein: each one of $R^{13}$, $R^{14}$ and $R^{15}$ are independently selected from the group consisting of a substituted or unsubstituted $(C_1\text{-}C_{14})$alkyl, $(C_5\text{-}C_6)$aryl, $(C_2\text{-}C_{14})$alkenyl and $(C_2\text{-}C_{14})$alkyl-CH=CH-; and m and n are independently an integer comprised from 0 to 20; or alternatively
a compound of formula (IV-A)

$$CF_3\text{-}(CF_2)_n(CH_2)_m\text{-}SiX_3 \qquad (IV\text{-}A)$$

wherein X is an halogen independently selected from the group consisting of chlorine, bromine and iodine; preferably chlorine; and m and n are independently an integer comprised from 0 to 20; or alternatively
a compound of formula (V-A)

$$R^{16}Si(OR^{17})(OR^{18})(OR^{19}) \qquad (V\text{-}A)$$

wherein each $R^{16}$, $R^{17}$, $R^{18}$ and $R^{19}$ are independently selected from the group consisting of $(C_1\text{-}C_{20})$alkyl, $(C_2\text{-}C_{20})$alkenyl and $(C_2\text{-}C_{20})$alkyl-CH=CH-; or alternatively
a compound of formula (VI-A)

$$CH_3\text{-}(CH_2)_m\text{-}SiX_3 \qquad (VI\text{-}A)$$

wherein X is an halogen independently selected from the group consisting of chlorine, bromine and iodine; preferably chlorine and m is an integer comprised from 0 to 20.

In an embodiment, optionally in combination with one or more features of the various embodiments described above or below, the silicon precursor having at least one non-hydrolysable substituent bonded to the silicon atom is a compound of formula (III) or (III-A) selected from the group consisting of triethoxy-(1H,1H,2H,2H-perfluorododecyl)silane (FAS21), trimethoxy-(1H,1H,2H,2H-perfluorododecyl)silane, triethoxy-(1H,1H,2H,2H-perfluorodecyl)silane, trimethoxy-(1H,1H,2H,2H-perfluorodecyl)silane, triethoxy-(1H,1H,2H,2H-perfluorooctyl)silane, trimethoxy-(1H,1H,2H,2H-perfluorooctyl)silane, triethoxy(3,3,3-trifluoropropyl)silane and trimethoxy(3,3,3-trifluoropropyl)silane; preferably triethoxy-(1H,1H,2H,2H-perfluorododecyl)silane (FAS21).

In an embodiment, optionally in combination with one or more features of the various embodiments described above or below, the silicon precursor having at least one non-hydrolysable substituent bonded to the silicon atom is a compound of formula (IV) or (IV-A) wherein X is chlorine. In an embodiment, optionally in combination with one or more features of the various embodiments described above or below the at least one non-hydrolysable substituent bonded to the silicon atom is a compound of formula (IV) selected from the group consisting of 1H,1H,2H,2H-perfluorododecyltrichlorosilane, 1H,1H,2H,2H-perfluorodecyltrichlorosilane, 1H,1H,2H,2H-perfluorooctyltrichlorosilane, and trichloro(3,3,3-trifluoropropyl)silane; preferably 1H,1H,2H,2H-perfluorododecyltrichlorosilane.

In an embodiment, optionally in combination with one or more features of the various embodiments described above or below, the silicon precursor having at least one non-hydrolysable substituent bonded to the silicon atom is a compound of formula (V) or (V-A). In an embodiment, optionally in combination with one or more features of the various embodiments described above or below the at least one non-hydrolysable substituent bonded to the silicon atom is a compound of formula (V) selected from the group consisting of octadecyltriethoxysilane, octadecyltrimethoxysilane, dodecyltriethoxysilane, dodecyltrimethoxysilane, octyltriethoxysilane and octyltrimethoxysilane; preferably octadecyltriethoxysilane.

In an embodiment, optionally in combination with one or more features of the various embodiments described above or below, the silicon precursor having at least one non-hydrolysable substituent bonded to the silicon atom is a compound of formula (VI) or (VI-A) wherein X is chlorine. In an embodiment, optionally in combination with one or more features of the various embodiments described above or below the at least one non-hydrolysable substituent bonded to the silicon atom is a compound of formula (VI) selected from the group consisting of trichloro(octadecyl)silane, trichlorododecylsilane and trichloro(octyl)silane; preferably trichloro(octadecyl)silane.

In an embodiment, optionally in combination with one or more features of the various embodiments described above or below, the process of the second aspect of the invention is one wherein the hydrolysable silicon alkoxide is TEOS, and the silicon precursor having at least one non-hydrolysable substituent is FAS21. In a particular embodiment, optionally in combination with one or more features of the various embodiments described above or below, the molar ratio between the hydrolysable silicon alkoxide and the silicon precursor having at least one non-hydrolysable substituent is comprised from 50 to 150. In a particular embodiment, the hydrolysable silicon alkoxide is TEOS, and the silicon precursor having at least one non-hydrolysable substituent is FAS21 and the molar ratio between the TEOS and the FAS21 is comprised from 50 to 150.

All the embodiments disclosed above for steps a)-d) of the process of the first aspect of the invention also apply for the process for preparing the anti-reflective water-repellent sol-gel coating composition of the second aspect of the invention.

In an embodiment, optionally in combination with one or more features of the various embodiments described above or below, the concentration of surfactant of formula (II) as defined above, preferably polyethylene (20) oxide hexadecyl ether, in step d) of the second aspect of the invention is comprised from 55 g/L to 70 g/L.

The anti-reflective sol-gel coating composition of the invention may be defined by its preparation process as defined above and therefore, the anti-reflective sol-gel coating composition obtainable by the process above is considered part of the invention. Thus, the third aspect of the invention relates to an anti-reflective sol-gel coating composition for coating a substrate defined in the present invention obtainable by the process comprising: a) first mixing an hydrolysable silicon alkoxide, one or more ($C_1$-$C_8$)alcohols, an aqueous solution of at least one acid catalyst; and one or more surfactants of formula (II) as defined above, preferably polyethylene (20) oxide hexadecyl ether; then maintaining the resulting mixture at a temperature comprised from 50°C to 120°C for an appropriate period of time; preferably comprised from 70 min to 120 min; and finally cooling the mixture until reaching a temperature comprised from 30°C to 50°C; wherein: the concentration in the resulting first mixture of the surfactant of formula (II) as defined above, preferably polyethylene (20) oxide hexadecyl ether, is comprised from 150 g/L to 300 g/L; and the molar ratio between the hydrolysable silicon alkoxide and the aqueous solution of at least one acid catalyst is comprised from 0.15 to 1; the molar ratio between the hydrolysable silicon alkoxide and the ($C_1$-$C_8$) alcohol is comprised from 0.15 to 0.30, and the molar ratio between the hydrolysable silicon alkoxide and the surfactant of formula (II) as defined above, preferably polyethylene (20) oxide hexadecyl ether, is comprised from 7 to 11.5; b) preparing a second mixture by mixing one or more ($C_1$-$C_8$)alcohols, and an aqueous solution of at least one acid catalyst; and maintaining the resulting mixture at a temperature comprised from 15°C to 30°C; c) adding the second mixture obtained in step b) to the resulting mixture of step a); and maintaining the resulting mixture at a temperature comprised from 30°C to 50°C for an appropriate period of time; preferably comprised from 50 min to 90 min; and d) cooling the resulting mixture obtained in step c) until reaching a temperature comprised from 15°C to 30°C; and adding one or more ($C_1$-$C_8$)alcohols until the molar ratio between the hydrolysable silicon alkoxide and the ($C_1$-$C_8$)alcohol in the anti-reflective sol-gel coating composition is comprised from 0.025 to 0.100; preferably comprised from 0.025 to 0.050; wherein: the concentration in the anti-reflective sol-gel coating composition of the surfactant of formula (II) as defined above, preferably polyethylene (20) oxide hexadecyl ether, is comprised from 55 g/L to 90 g/L; preferably comprised from 75 to 90 g/L; the molar ratio between the hydrolysable silicon alkoxide and the aqueous solution of at least one acid catalyst is comprised from 0.050 to 0.350; preferably comprised from 0.050 to 0.250; and the molar ratio between the hydrolysable silicon alkoxide and the surfactant of formula (II) as defined above, preferably polyethylene (20) oxide hexadecyl ether, is comprised from 7 to 11.5; preferably comprised from 8 to 9.5. All the embodiments disclosed above for steps a)-d) of the process of the first aspect of the invention also apply for the anti-reflective sol-gel coating composition obtainable by the process of the third aspect of the invention.

The anti-reflective water-repellent sol-gel coating composition of the invention may be also defined by its preparation process as defined above and therefore, the anti-reflective water-repellent sol-gel coating composition for coating a substrate obtainable by the process above is considered part of the invention. Thus, the fourth aspect of the invention relates to an anti-reflective water-repellent sol-gel coating composition defined above obtainable by the process comprising: a) first mixing an hydrolysable silicon alkoxide, one or more ($C_1$-$C_8$)alcohols, an aqueous solution of at least one acid catalyst; one or more surfactants of formula (II) as defined above, preferably polyethylene (20) oxide hexadecyl ether, and a silicon precursor having at least one non-hydrolysable substituent bonded to the silicon atom; then maintaining the resulting mixture at a temperature comprised from 50°C to 120°C for an appropriate period of time; preferably for a period of time comprised from 70 min to 120 min; and finally cooling the mixture until reaching a temperature comprised from 30°C to 50°C; wherein: the concentration in the resulting first mixture of the surfactant of formula (II) as defined above, preferably polyethylene (20) oxide hexadecyl ether, is comprised from 150 g/L to 300 g/L; the molar ratio between the hydrolysable silicon alkoxide and the aqueous solution of at least one acid catalyst is comprised from 0.15 to 1; the molar ratio between the hydrolysable silicon alkoxide and the ($C_1$-$C_8$)alcohol is comprised from 0.15 to 0.30,

and the molar ratio between the hydrolysable silicon alkoxide and the surfactant of formula (II) as defined above, preferably polyethylene (20) oxide hexadecyl ether, is comprised from 7 to 11.5; b) preparing a second mixture by mixing one or more $(C_1-C_8)$alcohols, and an aqueous solution of at least one acid catalyst; and maintaining the resulting mixture at a temperature comprised from 15°C to 30°C; c) adding the second mixture obtained in step b) to the resulting mixture of step a); and maintaining the resulting mixture at a temperature comprised from 30°C to 50°C for an appropriate period of time; preferably comprised from 50 min to 90 min; and d) cooling the resulting mixture obtained in step c) until reaching a temperature comprised from 15°C to 30°C; and adding one or more $(C_1-C_8)$alcohols until the molar ratio between the hydrolysable silicon alkoxide and the $(C_1-C_8)$alcohol is comprised from 0.025 to 0.100; preferably comprised from 0.025 to 0.050; wherein: the concentration in the anti-reflective water-repellent sol-gel coating composition of the surfactant of formula (II) as defined above, preferably polyethylene (20) oxide hexadecyl ether, is comprised from 55 g/L to 90 g/L preferably comprised from 55 g/L to 70 g/L; and the molar ratio between the hydrolysable silicon alkoxide and the aqueous solution of at least one acid catalyst is comprised from 0.050 to 0.350; preferably comprised from 0.050 to 0.250; and the molar ratio between hydrolysable silicon alkoxide and the surfactant of formula (II) as defined above, preferably polyethylene (20) oxide hexadecyl ether, is comprised from 7 to 11.5; preferably comprised form 8 to 9.5; and the molar ratio between the hydrolysable silicon alkoxide and the silicon precursor having at least one non-hydrolysable substituent bonded to the silicon atom is comprised from 50 to 150.

All the embodiments disclosed above for steps a)-d) of the process of the first aspect of the invention and also step a) of the process of the second aspect of the invention also apply for the anti-reflective water-repellent sol-gel coating composition obtainable by the process of the fourth aspect of the invention.

The present invention also relates to processes for preparing a single anti-reflective coating on a substrate having enhanced anti-reflective properties and durability. Thus, the fifth aspect of the invention relates to a process for preparing a single anti-reflective coating on a substrate which comprises: e) depositing a mono-layer of the anti-reflective sol-gel coating composition as defined in the third aspect of the invention or alternatively, the anti-reflective water-repellent sol-gel coating composition as defined in the fourth aspect of the invention over the substrate; and f) sintering the coating obtained in step e).

For the purposes of the invention, the term "substrate" refers to a substantially transparent material having a refractive index comprised from 1.45 to 1.65 measured at a wavelength of 632.8 nm.

The substrate can be any transparent rigid or flexible substrate. In an embodiment, optionally in combination with one or more features of the various embodiments described above or below, the substrate is selected from the group consisting of silica glass, oxide glass and polymeric substrate.

In an embodiment, optionally in combination with one or more features of the various embodiments described above or below, the substrate is selected from the group consisting of silica glass and oxide glass substrate and it can be thermally or chemically tempered, toughened or strengthened, annealed or untreated glass, wherein the silica glass and the oxide glass is selected from the group consisting of fused quartz/fused silica glass, soda lime silica glass, low iron soda lime silica glass (also named extra clear glass), borosilicate glass, sodium borosilicate glass, alkali-barium silicate glass, aluminosilicate glass, lead-oxide glass, phosphate glass, borate glass, fluoride glass, chalcogenide glass, solar glass, optical glass, oxide composed glass, and mixture thereof.

In an embodiment, optionally in combination with one or more features of the various embodiments described above or below, the substrate is a polymeric substrate selected from the group consisting of polycarbonate polymers (PC) and poly(methyl methacrylate) (PMMA), polystyrene (PS), and mixture thereof.

In an embodiment, optionally in combination with one or more features of the various embodiments described above or below, when the substrate is silica glass or oxide glass then the process further comprises a previous step prior step e) which comprises degreasing and cleaning the glass. The degreasing and cleaning steps can be performed using the known techniques of the state of the art such as by plasma cleaning, UV-Ozone cleaning, ultrasonically cleaning and wet-chemical cleaning. In an embodiment, optionally in combination with one or more features of the various embodiments described above or below, when the substrate is silica glass or oxide glass then the process further comprises a previous step prior step e) which comprises degreasing and cleaning the glass by immersing the glass in an ultrasonic bath in the presence of a solvent such as for example $(C_1-C_4)$ alcohol.

In an embodiment, optionally in combination with one or more features of the various embodiments described above or below, step e) of the process of the invention can be performed using the known techniques of the state of the art for depositing a coating over a substrate. In an embodiment, optionally in combination with one or more features of the various embodiments described above or below, the coating of the invention can be deposited over the substrate (step e) using a technique selected from the group consisting of spin-coating, dip-coating, spray-coating, flow-coating, roll-coating, web-coating, ink-jet printing, doctor blade coating, printing such as screen-printing, ink-jet printing, flexographic printing, gravure printing, and micro-gravure printing. In an embodiment, optionally in combination with one or more features of the various embodiments described above or below, the anti-reflective coating of the invention is deposited over the substrate (step e) by dipping the substrate in the sol-gel coating composition of the third and the fourth aspect of the invention.

**EP 3 568 379 B1**

In an embodiment, optionally in combination with one or more features of the various embodiments described above or below, step e) is performed by dipping the substrate in the sol-gel coating composition of the third and the fourth aspect of the invention at a deposition rate comprised from 2 cm/min to 40 cm/min; preferably the deposition rate is comprised from 2 cm/min to 10 cm/min; more preferably comprised from 2 cm/min to 6 cm/min.

As it is mentioned above, the process for preparing a single anti-reflective coating on a substrate comprises a sintering step f) after the deposition of the coating composition of the invention over the substrate. Examples of techniques appropriate for performing step f) can be, without limitation, conventional thermal sintering, or thermal sintering during glass conventional thermal tempering or conventional thermal strengthening.

In an embodiment, optionally in combination with one or more features of the various embodiments described above or below, the substrate is glass and then the sintering step f) is carried out by a conventional thermal sintering method, or alternatively by a thermal sintering during glass conventional thermal tempering or conventional thermal strengthening. In an embodiment, optionally in combination with one or more features of the various embodiments described above or below, the substrate is glass and the sintering step f) is carried out by a conventional thermal sintering method which comprises heating the coated glass at a temperature comprised from 200°C to 700°C; preferably comprised from 240°C to 550°C.

In an embodiment, optionally in combination with one or more features of the various embodiments described above or below, the sintering step f) is carried out by a conventional thermal sintering at a temperature comprised from 240°C to 350°C, and then the process further comprises an additional step f') after method f) that comprises treating the coated substrate with a solution of water and water miscible organic solvent. In an embodiment, step f') is carried out in the presence of a mixture of water and a miscible organic solvent selected from the group consisting of $(C_1\text{-}C_4)$alcohol, $(C_1\text{-}C_4)$alkyl-CO-$(C_1\text{-}C_4)$alkyl and mixtures thereof. Examples of appropriate alcohols for the present invention include methanol, ethanol, n-propanol, isopropanol, butanol, iso-butanol, and sec-butanol. In an embodiment, optionally in combination with one or more features of the various embodiments described above or below, step f') is performed by immersing the coated substrate obtained in step f) in the mixture of water and the miscible organic solvent as defined above; preferably, step f') is performed under ultrasonic activity (cavitation).

In an embodiment, optionally in combination with one or more features of the various embodiments described above or below, the substrate is glass and the sintering step f) is carried out by thermal sintering during glass conventional thermal tempering, or conventional thermal strengthening processes that involve heat treatment of annealed glass in a furnace. The thermal sintering during glass conventional thermal tempering, or conventional thermal strengthening can be performed using the known techniques of the state of the art in order to cover the requirements specified in standards: ASTM C1048 Standard specification for heat-strengthened and fully tempered flat glass; and EN 12150 Glass in building - Thermally toughened soda lime silicate safety glass. In an embodiment, the thermal sintering during glass conventional thermal tempering, or conventional thermal strengthening processes comprises heating the glass at a temperature comprised from 600°C to 700°C; and force-cooling the glass obtained in previous step at a temperature comprised from 20°C to 150°C to create surface and edge compression by air-quenching.

In an embodiment, optionally in combination with one or more features of the various embodiments described above or below, the substrate is a polymeric substrate and then the sintering step f) is carried out by a conventional thermal sintering method, photochemical treatments (such as ultraviolet or infrared treatments), or microwave treatment. In an embodiment, optionally in combination with one or more features of the various embodiments described above or below, the substrate is polymeric substrate and the sintering step f) is carried out by a conventional thermal sintering method which comprises heating the polymeric substrate at a temperature comprised from 200°C to 275°C.

Furthermore, the sixth aspect of the invention relates to a process for preparing an anti-reflective multi-layer stack on a substrate which comprises: g) firstly, depositing an inner layer over the substrate by a process which comprises: g1) providing a sol-gel coating composition obtainable by a process which comprises: g1a) first mixing an hydrolysable silicon alkoxide, one or more $(C_1\text{-}C_8)$alcohols, and an aqueous solution of at least one acid catalyst; then maintaining the resulting mixture at a temperature comprised from 50°C to 120°C for an appropriate period of time; preferably comprised from 70 min to 120 min; and finally cooling the mixture until reaching a temperature comprised from 30°C to 50°C; g1b) preparing a second mixture by mixing one or more $(C_1\text{-}C_8)$alcohols, and an aqueous solution of at least one acid catalyst; and maintaining the resulting mixture at a temperature comprised from 15°C to 30°C for an appropriate period of time; preferably for a period of time comprised from 5 min to 30 min; g1c) adding the second mixture obtained in step g1b) to the resulting mixture of step g1a); and maintaining the resulting mixture at a temperature comprised from 30°C to 50°C for an appropriate period of time; preferably comprised from 50 min to 90 min; g2) depositing the sol-gel coating composition over the substrate; and g3) drying or sintering the coating obtained in step g2); and h) secondly, depositing an external anti-reflective layer over the inner layer on the substrate, by a process which comprises: h1) depositing the anti-reflective sol-gel coating composition as defined in the third aspect of the invention; or alternatively, the anti-reflective water-repellent sol-gel coating composition as defined in the fourth aspect of the invention, over the inner layer on the substrate; and h2) sintering the coating obtained in step h1), to obtain an anti-reflective multi-layer stack on a substrate formed by a first inner layer of a sol-gel coating composition and a second external layer (deposited onto the inner layer) of an anti-reflective sol-gel coating composition of the invention, or alternatively a second external layer (deposited on the inner layer) of an anti-reflective water-repellent sol-gel coating composition of the invention.

In an embodiment, optionally in combination with one or more features of the various embodiments described above or below, step g3) is performed by drying at a temperature comprised from 100°C to 200°C. In an embodiment, optionally in combination with one or more features of the various embodiments described above or below, step g3) is performed by sintering the coating obtained in step g2) by conventional thermal sintering, or alternatively thermal sintering during glass conventional thermal tempering, toughening or thermal strengthening. In an embodiment, optionally in combination with one or more features of the various embodiments described above or below, step g3) is performed by conventional thermal sintering at a temperature comprised from 200 to 700°C, preferably comprised from 350°C to 550°C. In an embodiment, optionally in combination with one or more features of the various embodiments described above or below, step g3) is performed by thermal sintering during glass conventional thermal tempering, or conventional thermal strengthening following a process that comprises heating the glass at a temperature comprised from 600°C to 700°C; and force-cooling the glass obtained in previous step at a temperature comprised from 20°C to 150°C to create surface and edge compression by air-quenching.

In an embodiment, optionally in combination with one or more features of the various embodiments described above or below, the process for preparing a multi-layer stack coated substrate as defined above is that wherein the second external layer (deposited on the inner layer) of a sol-gel anti-reflective coating composition of the invention and the sintering step g3) is carried out by a conventional thermal sintering or alternatively by thermal sintering during glass conventional thermal tempering or conventional thermal strengthening as defined above. In an embodiment, optionally in combination with one or more features of the various embodiments described above or below, the process for preparing an anti-reflective multi-layer stack on a substrate as defined above is that wherein the second external layer (deposited on the inner layer) is an anti-reflective water-repellent sol-gel coating composition of the invention and the sintering step is carried out by conventional thermal sintering.

In an embodiment, optionally in combination with one or more features of the various embodiments described above or below, when the substrate is glass then the process further comprises a previous step prior step g) which comprises degreasing and cleaning the glass. The degreasing and cleaning steps can be performed using the known techniques of the state of the art as defined above in the present invention.

In an embodiment, optionally in combination with one or more features of the various embodiments described above or below, the process for preparing an anti-reflective multi-layer stack on a substrate as defined above is that wherein the sintering step h2) is carried out by a conventional thermal sintering or alternatively by thermal sintering during glass conventional thermal tempering or conventional thermal strengthening as defined above.

In an embodiment, optionally in combination with one or more features of the various embodiments described above or below, the process for preparing an anti-reflective multi-layer stack on a substrate as defined above is that wherein step g3) is performed by thermal sintering during glass conventional thermal tempering or conventional thermal strengthening and step h2) is performed by a conventional thermal sintering at a temperature comprised from 200°C to 250°C.

All embodiments disclosed above for steps a)-d) of the process of the first aspect of the invention also apply for steps g) and h) of the process of the sixth aspect of the invention. Further, all embodiments disclosed above for steps e) and f) of the process of the fifth aspect of the invention also apply for steps g) and h).

In an embodiment, optionally in combination with one or more features of the various embodiments described above or below, the process of the invention is that wherein step g) is performed by depositing a first inner layer over the substrate by a process which comprises: g1) providing a sol-gel coating composition obtainable by a process which comprises: g1a) first mixing TEOS, ethanol and an aqueous solution of HCl; then maintaining the resulting mixture at a temperature comprised from 50°C and 70°C for a period of time comprised from 70 min to 120 min; and finally cooling the mixture until reaching a temperature comprised from 30°C to 50°C; g1b) preparing a second mixture by mixing ethanol, and an aqueous solution of HCl; and maintaining the resulting mixture at a temperature comprised from 15°C to 30°C for a period of time comprised from 5 min to 30 min; g1c) adding the second mixture obtained in step g1b) to the resulting mixture of step g1a); and maintaining the resulting mixture at a temperature comprised from 30°C to 50°C for an appropriate period of time; preferably comprised from 50 min to 90 min; g2) depositing the sol-gel coating composition over the substrate; and g3) drying or alternatively sintering the coating obtained in step g2).

In an embodiment, optionally in combination with one or more features of the various embodiments described above or below, the process of the invention is that wherein step h) is performed by depositing an external anti-reflective layer over the inner layer on the substrate, by a process which comprises: h1) depositing the anti-reflective sol-gel coating composition as defined in the third aspect of the invention; or alternatively, the anti-reflective water-repellent sol-gel coating composition as defined in the fourth aspect of the invention, over the inner layer on the substrate; and h2) sintering the coating obtained in step h1).

In an embodiment, optionally in combination with one or more features of the various embodiments described above or below, the process for preparing a single anti-reflective coating on a substrate of the fifth aspect of the invention further comprises an additional step i) after step f); or alternatively the process further comprises additional step ii) after step f); or alternatively the process further comprises additional step i) after step f) followed by step ii); or alternatively the process further comprises additional step ii) after step f) followed by step i); wherein: step i) comprises depositing one or more additional coating over the external coating of the substrate; and step ii) comprises surface functionalization of the external coating of the substrate.

In an embodiment, optionally in combination with one or more features of the various embodiments described above or below, the process for preparing an anti-reflective multi-layer stack on a substrate of the sixth aspect of the invention further comprises an additional step i) after step h); or alternatively the process further comprises additional step ii) after step h); or alternatively the process further comprises additional step i) after step h) followed by step ii); or alternatively the process further comprises additional step ii) after step h) followed by step i); wherein: step i) comprises depositing one or more additional coating over the external coating of the substrate; and step ii) comprises surface functionalization of the external coating of the substrate.

In an embodiment, processes of the fifth and sixth aspect of the invention further comprises additional step i) or alternatively additional step ii) as defined above.

In an embodiment, optionally in combination with one or more features of the various embodiments described above or below, the process for preparing a single anti-reflective coating on a substrate of the fifth aspect of the invention further comprises an additional step i) after step f). In an alternative embodiment, optionally in combination with one or more features of the various embodiments described above or below, the process for preparing a single anti-reflective coating on a substrate of the fifth aspect of the invention further comprises additional step ii) after step f).

In an embodiment, optionally in combination with one or more features of the various embodiments described above or below, the process for preparing an anti-reflective multi-layer stack on a substrate of the sixth aspect of the invention further comprises an additional step i) after step h). In an alternative embodiment, optionally in combination with one or more features of the various embodiments described above or below, the process for preparing an anti-reflective multi-layer stack on a substrate of the sixth aspect of the invention further comprises additional step ii) after step h).

In an embodiment, processes of the fifth and sixth aspect of the invention further comprises additional steps i) and step ii) in any order.

In an embodiment, optionally in combination with one or more features of the various embodiments described above or below, the process for preparing a single anti-reflective coating on a substrate of the fifth aspect of the invention further comprises additional step i) after step f) followed by step ii). In an alternative embodiment, optionally in combination with one or more features of the various embodiments described above or below, the process for preparing a single anti-reflective coating on a substrate of the fifth aspect of the invention further comprises additional step ii) after step f) followed by step i).

In an embodiment, optionally in combination with one or more features of the various embodiments described above or below, the process for preparing an anti-reflective multi-layer stack on a substrate of the sixth aspect of the invention further comprises additional step i) after step h) followed by step ii). In an alternative embodiment, optionally in combination with one or more features of the various embodiments described above or below, the process for preparing an anti-reflective multi-layer stack on a substrate of the sixth aspect of the invention further comprises additional step ii) after step h) followed by step i).

Step i) can be performed using the known techniques of the state of the art for depositing a coating over a substrate, for example deposition of pure or mixed ceramic coating by sol-gel technique, deposition of metal coating by electroless plating and sputtering deposition. In an embodiment, optionally in combination with one or more features of the various embodiments described above or below, step i) comprises depositing one or more additional ceramic or mixed ceramic materials over the external sintered coating of the substrate of the present invention.

Step ii) can be performed using the known techniques of the state of the art for surface functionalisation, for instance by wet techniques based on solutions containing chemical precursors or alternatively by dry techniques such as for example Chemical Vapour Deposition or plasma assisted technologies. In an embodiment, optionally in combination with one or more features of the various embodiments described above or below, step ii) is performed by silylation or hydrocarbonation or fluorocarbonation of the resulting coated substrate; preferably silylation with one or more silylating agent. The treatment with silylating agent allows reducing the number of free silanol groups (Si-OH) in the surface of the coated substrate and permits to functionalise surface by attaching organic groups to Si thus permitting to obtain hydrophobic or superhydrophobic surfaces. In an embodiment, optionally in combination with one or more features of the various embodiments described above or below, step ii) comprises surface functionalisation over the external sintered coating of the substrate of the present invention such as for example organosilicon, hydrocarbon and/or fluorocarbon functionalization by wet or dry technologies.

In an embodiment, step ii) comprises reacting the surface of the coated substrate with a silylating compound optionally followed by a thermal drying step. In embodiment, the step ii) is performed by reacting the surface of the coated substrate with a mixture of a silylating compound with an organic solvent optionally followed by a thermal drying step; preferably the organic solvent is selected from $(C_1-C_8)$alcohol, linear or branched $(C_5-C_{16})$alkane, and cycloalkane preferably the organic solvent is a $(C_1-C_8)$alcohol selected from ethanol, isopropanol, and n-propanol; more preferably n-propanol.

In an embodiment, the silylating compound used in step ii) is selected from the group consisting of a compound of formula (VII)

$$R^{20}R^{21}R^{22}Si-R^{23} \qquad (VII)$$

or alternatively a compound of formula (VIII)

$$R^{24}R^{25}R^{26}-Si-Z-Si-R^{27}R^{28}R^{29} \qquad (VIII)$$

wherein $R^{20}$, $R^{21}$, $R^{22}$, $R^{24}$, $R^{25}$, $R^{26}$, $R^{27}$, $R^{28}$ and $R^{29}$ are independently selected from the group consisting of substituted or unsubstituted $(C_1-C_{14})$alkyl, $(C_5-C_6)$aryl, $(C_2-C_{14})$alkenyl and $(C_2-C_{14})$alkynyl group; substituted or unsubstituted fluoro-$(C_1-C_{14})$alkyl, fluoro-$(C_5-C_6)$aryl, fluoro-$(C_2-C_{14})$alkenyl and fluoro-$(C_2-C_{14})$alkynyl group; $R^{23}$ is selected from the group consisting of halogen, $(C_5-C_6)$aryl, -NH$_2$, -NHR$^{30}$, -N(R$^{31}$)$_2$, -NH-CO-$(C_1-C_6)$alkyl, and -NH-CO-CF$_3$; each $R^{30}$ and each $R^{31}$ are independently selected from the group consisting of substituted or unsubstituted $(C_1-C_{14})$alkyl, $(C_5-C_6)$aryl, $(C_2-C_{14})$alkenyl and $(C_2-C_{14})$alkynyl; Z is selected from the group consisting of-NH-, -N$(C_1-C_6)$alkyl-, -N$(C_1-C_6)$alkyl-O-, -N-fluoro-$(C_1-C_6)$alkyl-O-, -N$(C_1-C_6)$alkyl -O-), -NH-COO-, -NH-O-, -N$(C_1-C_6)$alkyl-, -O-SO$_2$-O-, -N-fluoro-$(C_1-C_6)$alkyl-O-, -NH-CO-NH-. In an embodiment, optionally in combination with one or more features of the various embodiments described above or below, the silylating agent used in step ii) is selected from the group consisting of trimethylchlorosilane (TMCS), trimethylbromosilane (TMBS), trimethyliodosilane (TMIS), trimethylsilylimidazole (TMSI), N-Trimethylsilyldimethylamine (TMSDMA),N-trimethylsilyldiethylamine (TMSDEA), N-trimethylsilylacetamide (TMSA), N-methyl-N-trimethyl-silyltrifluoroacetamide (MSTFA), hexamethyldisilazane (HMDS), N,O-Bis-(trimethylsilyl)-acetamide (BSA), N,O-Bis-(trimetylsilyl)-trifluoroacetamide (BSTFA), N,O-Bis(trimethylsilyl)carbamate (BSC), N, N-Bis(trimethylsilyl)formamide (BSF), N,N-Bis(trimethylsilyl)methylamine, Bis(trimethylsilyl) sulfate (BSS), N,N'-Bis(trimethylsilyl)urea (BSU) and mixture thereof.

In an embodiment, the thermal drying step of step ii) is performed at a temperature comprised from 80°C and 250°C.

In an embodiment, step ii) is performed by adding a solution of n-propanol and a silylating agent as defined above, preferably HMDS, followed by thermal drying at a temperature comprised between 80°C and 250°C.

In an embodiment, optionally in combination with one or more features of the various embodiments described above or below, the processes of the fifth and the sixth aspect of the invention are performed by applying the sol-gel coating compositions as define above onto one or both sides of the substrate.

The single anti-reflective coating on a substrate of the invention may be defined by its preparation process as defined above and therefore, the anti-reflective coating on a substrate obtainable by the process above is considered part of the invention. Thus, a single anti-reflective coating on a substrate which comprises: e) depositing a mono-layer of the anti-reflective sol-gel coating composition as defined in the third aspect of the invention over the substrate or the anti-reflective water-repellent sol-gel coating composition of the fourth aspect of the invention over a substrate; and f) sintering the coating obtained in step e) and optionally further comprises an additional step i) after step f); or alternatively the process further comprises additional step ii) after step f); or alternatively the process further comprises additional step i) after step f) followed by step ii); or alternatively the process further comprises additional step ii) after step f) followed by step i); wherein: step i) comprises depositing one or more additional coating over the external coating of the substrate; and step ii) comprises surface functionalization of the external coating of the substrate to obtain an anti-reflective coating as a mono-layer on a substrate having anti-reflective properties is also part of the invention.

The anti-reflective multi-layer stack on a substrate of the invention may be defined by its preparation process as defined above and therefore, the coated substrates obtainable by the process above is considered part of the invention. Thus, an anti-reflective multi-layer stack on a substrate which comprises: g) firstly, depositing an inner layer over the substrate by a process which comprises: g1) providing a sol-gel coating composition obtainable by a process which comprises: g1a) first mixing an hydrolysable silicon alkoxide, one or more $(C_1-C_8)$alcohols, and an aqueous solution of at least one acid catalyst; then maintaining the resulting mixture at a temperature comprised from 50°C to 120°C for an appropriate period of time; preferably comprised from 70 min to 120 min and finally cooling the mixture until reaching a temperature comprised from 30°C to 50°C; g1b) preparing a second mixture by mixing one or more $(C_1-C_8)$alcohols, and an aqueous solution of at least one acid catalyst; and maintaining the resulting mixture at a temperature comprised from 15°C to 30°C for an appropriate period of time; preferably comprised from 5 min to 30 min; g1c) adding the second mixture obtained in step g1b) to the resulting mixture of step g1a); and maintaining the resulting mixture at a temperature comprised from 30°C to 50°C for an appropriate period of time; preferably comprised from 50 min to 90 min; g2) depositing the sol-gel coating composition over the substrate; and g3) drying or alternatively sintering the coating obtained in step g2); and h) secondly, depositing an external anti-reflective layer over the inner layer on the substrate, by a process which comprises: h1) depositing the anti-reflective sol-gel coating composition as defined in the third aspect of the invention; or alternatively, the anti-reflective water-repellent sol-gel coating composition as defined in the fourth aspect of the invention, over the inner layer on the substrate; and h2) sintering the coating obtained in step h1), and optionally further comprises an additional step i) after step h); or alternatively the process further comprises additional step ii) after step h); or alternatively the process further comprises additional step i) after step h) followed by step ii); or alternatively the process further comprises additional step ii) after step h) followed by step i); wherein: step i) comprises depositing one or more additional coating over the external coating of the substrate; and step ii) comprises surface functionalization of the external coating of the substrate to obtain an anti-reflective multi-layer stack on a substrate formed by a first inner layer of a sol-gel coating composition and a second external layer (deposited on the inner layer) of a sol-gel anti-reflective coating composition of the invention or alternatively a second external layer (deposited on the inner layer) of a sol-gel anti-reflective water-repellent coating composition of the invention is also part of the invention.

All the embodiments disclosed above for the steps e)-f), g)-h) and i)-ii) of the process of preparing the coated substrates also apply for the coated substrates obtainable by the process of the fifth and sixth aspect of the invention. Furthermore, all the embodiments disclosed above for the substrate also apply for the coated substrate obtainable by the process of the fifth and sixth aspect of the invention.

In an embodiment, optionally in combination with one or more features of the various embodiments described above or below, the single anti-reflective coating on a substrate is a mono-layer having a thickness comprised from 100 nm to 140 nm and a refractive index comprised from 1.20 to 1.26 at a wavelength of 700 nm which is obtainable by the process as defined in fifth aspect of the invention, wherein the hydrolysable silicon alkoxide is tetraethylorthosilicate (TEOS), the $(C_1-C_8)$alcohol is ethanol, and the aqueous solution of an acid catalyst is an aqueous solution of HCl, and the surfactant of formula (II) is polyethylene (20) oxide hexadecyl ether.

In an embodiment, optionally in combination with one or more features of the various embodiments described above or below, the anti-reflective multi-layer stack on a substrate is a bi-layer stack wherein the external layer of the stack has a thickness comprised from 100 nm to 140 nm and a refractive index comprised from 1.20 to 1.26 at a wavelength of 700 nm; and the inner layer of the stack has a thickness comprised from 95 nm to 150 nm and a refractive index comprised from 1.42 to 1.48 at a wavelength of 700 nm, which is obtainable by the process as defined in the sixth aspect of the invention, wherein the hydrolysable silicon alkoxide is tetraethylorthosilicate (TEOS), the $(C_1-C_8)$alcohol is ethanol, the acid catalyst is an aqueous acidic solution of HCl and the surfactant of formula (II) is polyethylene (20) oxide hexadecyl ether.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

## EXAMPLES

### Abbreviation

TEOS: tetraethylorthosilicate

FAS21: triethoxy-(1H,1H,2H,2H-perfluorododecyl)silane

HMDS: hexamethyldisilazane

BEMA: Bruggeman effective medium approximation

Brij58: polyethylene (20) oxide hexadecyl ether, poly(oxyethylene) cetyl ether, poly(oxyethylene)palmityl ether, polyethylene oxide hexadecyl ether, polyethylene glycol cetyl ether; CAS number 9004-95-9

Triton X-100: t-octylphenoxypolyethoxyethanol, polyethylene glycol tert-octylphenyl ether, polyoxyethylene (10) isooctylphenyl ether; CAS number 9002-93-1

CTAB: Cetyltrimethylammonium bromide; CAS number 57-09-0

Pluronic F127: 2-methyloxirane; 1,2-propyleneglycol ethoxylated and propoxylated; CAS number 9003-11-6

## 1. Sol-gel coating composition

### 1.A- Composition

Composition of sols

Tables 1A, 1B and 1C show the quantitative components intervening in the preparation of the sol-gel coating compositions of the present invention, where the amount of the ingredients is expressed in molar ratio. In those Tables it is also shown the concentration of polyethylene (20) oxide hexadecyl ether expressed in grams of polyethylene (20) oxide hexadecyl ether per litre of SOL.

Composition of the SOL 1

Table 1A shows the quantitative components intervening in the preparation of the sol 1 of the present invention which comprises polyethylene (20) oxide hexadecyl ether as a surfactant:

Table 1A

| Ingredients | | Examples | | |
|---|---|---|---|---|
| **Function** | **Name** | **1** | **2** | **3** |
| Hydrolysable silicon alkoxide | TEOS | 1 | 1 | 1 |
| Aqueous solution of at least on acid catalyst | HCl 0.1M | 4 | 8 | 8 |
| Surfactant | polyethylene (20) oxide hexadecyl ether (Brij58) | 0.1073 (75 g/L) | 0.1170 (75 g/L) | 0.1233 (77.6 g/L) |
| $(C_1-C_8)$alcohol | Ethanol | 22.5 | 23.7 | 24.4 |

Composition of the SOL 2

Table 1B shows the quantitative components intervening in the preparation of the SOL 2 of the present invention which comprises polyethylene (20) oxide hexadecyl ether as a surfactant, and FAS21 as a water-repellent agent:

Table 1B

| Ingredients | | Example |
|---|---|---|
| **Function** | **Name** | **4** |
| Hydrolysable silicon alkoxide | TEOS | 1 |
| An aqueous solution of at least an acid catalyst | HCl 0.1M | 8 |
| Surfactant | polyethylene (20) oxide hexadecyl ether (Brij58) | 0.123 (58.9 g/L) |
| $(C_1-C_8)$alcohol | Ethanol | 34.0 |
| Silicon precursor having a non-hydrolysable substituent bonded to silicon atom | FAS21 | 0.01 |

Composition of the SOL 3

Table 1C shows the quantitative components intervening in the preparation of the SOL 3 which they don't contain neither polyethylene (20) oxide hexadecyl ether nor FAS21 and it is used in the preparation of the anti-reflective multi-layer sol-gel stack on a substrate:

Table 1C

| Ingredients | | Example |
|---|---|---|
| **Function** | **Name** | **5** |
| Hydrolysable silicon alkoxide | TEOS | 1 |
| An aqueous solution of at least an acid catalyst | HCl 0.1 M | 4 |
| $(C_1-C_8)$alcohol | Ethanol | 8.7 |

**1.B- Comparative Composition**

Composition of sols

Tables 2A-2E show the quantitative components intervening in the preparation of the comparative sol-gel coating compositions outside the scope of the present invention, where the amount of the ingredients is expressed in molar ratio. In those Tables it is also shown the concentration of polyethylene (20) oxide hexadecyl ether or other surfactant different from polyethylene (20) oxide hexadecyl ether expressed in grams of surfactant per litre of SOL.

Comparative composition of SOL 1

Tables 2A and 2B show the quantitative components intervening in the preparation of the comparative sol-gel coating composition having a concentration of polyethylene (20) oxide hexadecyl ether in SOL 1 outside the scope of the present invention.

Table 2A

| Ingredients | | Comparative Examples | | | | | |
|---|---|---|---|---|---|---|---|
| **Function** | **Name** | **1** | **2** | **3** | **4** | **5** | **6** |
| Hydrolysable silicon alkoxide | TEOS | 1 | 1 | 1 | 1 | 1 | 1 |
| An aqueous solution of at least an acid catalyst | HCl 0.1M | 4 | 8 | 4 | 8 | 4 | 8 |
| Surfactant | polyethylene (20) oxide hexadecyl ether (Brij58) | 0.0179 (**25** g/L) | 0.0196 (**25** g/L) | 0.0358 (**50** g/L) | 0.039 (**50** g/L) | 0.0716 (**50** g/L) | 0.0780 (**50** g/L) |
| $(C_1-C_8)$ alcohol | ethanol | 8.7 | 8.7 | 8.7 | 8.7 | 22.5 | 23.7 |

Table 2B

| Ingredients | | Comparative Examples | | | |
|---|---|---|---|---|---|
| **Function** | **Name** | **7** | **8** | **9** | **10** |
| Hydrolysable silicon alkoxide | TEOS | 1 | 1 | 1 | 1 |
| An aqueous solution of at least an acid catalyst | HCl 0.1M | 4 | 8 | 4 | 8 |
| Surfactant | polyethylene (20) oxide hexadecyl ether (Brij58) | 0.0716 (**100** g/L) | 0.0780 (**100** g/L) | 0.1074 (**150** g/L) | 0.1170 (**150** g/L) |
| $(C_1-C_8)$alcohol | ethanol | 8.7 | 8.7 | 8.7 | 8.7 |

Tables 2C, 2D and 2E show the quantitative components intervening in the preparation of the comparative sol-gel coating compositions having as a surfactant other than polyethylene (20) oxide hexadecyl ether falling outside the scope of the present invention.

Table 2C

| Ingredient s (Name) | Comparative Examples | | | | | |
|---|---|---|---|---|---|---|
| | 11 | 12 | 13 | 14 | 15 | 16 |
| TEOS | 1 | 1 | 1 | 1 | 1 | 1 |
| $H_2SO_4$ 0.1 M | 8 | 8 | 8 | 8 | 8 | 8 |
| CTAB (Surfactant) | 0.060 (25 g/L) | 0.120 (50 g/L) | 0.241 (50 g/L) | 0.361 (75 g/L) | 0.241 (100 g/L) | 0.361 (150 g/L) |
| Ethanol | 8.7 | 8.7 | 23.7 | 23.7 | 8.7 | 8.7 |

Table 2D

| Ingredients (Name) | Comparative Examples | | | | | |
|---|---|---|---|---|---|---|
| | 17 | 18 | 19 | 20 | 21 | 22 |
| TEOS | 1 | 1 | 1 | 1 | 1 | 1 |
| $H_2SO_4$ 0.1 M | 8 | 8 | 8 | 8 | 8 | 8 |
| Triton X-100 (Surfactant) | 0.034 (25 g/L) | 0.071 (50 g/L) | 0.150 (50 g/L) | 0.237 (75 g/L) | 0.150 (100 g/L) | 0.237 (150 g/L) |
| Ethanol | 8.7 | 8.7 | 25.3 | 26.2 | 8.7 | 8.7 |

Table 2E

| Ingredients (Name) | Comparative Examples | |
|---|---|---|
| | 23 | 24 |
| TEOS | 1 | 1 |
| $H_2SO_4$ 0.1M | 8 | 8 |
| Pluronic F127 (Surfactant) | 0.0018 (25 g/L) | 0.0037 (50g/L) |
| Ethanol | 8.7 | 8.7 |

**1.C- Preparation Process**

A. General procedure for the preparation of SOL 1 of Examples 1-3

Preparation of the first mixture:

TEOS, and the polyethylene (20) oxide hexadecyl ether were mixed in an aqueous HCl 0.1M solution in ethanol media. The resultant solution was stirred during 90 min at 60°C.

Preparation of the second mixture:

Separately and simultaneously, ethanol and HCl 0.1M were mixed and stirred during 10 min at room temperature.

Combination of the first mixture and the second mixture:

Cooling the first mixture until reaching a temperature of 40°C; and after the 10 min of stirring of second mixture, the latter was added to the first mixture; and then, the resulting mixture was stirred for 60 min and then cooled at room temperature and aged for 24h. After that time, ethanol was added to the solution and kept stirring for 30 min to obtain SOL 1.

The amount of the TEOS, aqueous HCl 0.1M solution, ethanol and polyethylene (20) oxide hexadecyl ether used for the preparation of SOL 1 are those disclosed in the above mentioned Table 1A.

## B. General procedure for the preparation of SOL 2 of Example 4

### Step a) Preparation of the first mixture

TEOS, FAS 21 and the polyethylene (20) oxide hexadecyl ether were mixed in an aqueous HCl 0.1M solution in ethanol media. The resultant solution was stirred during 90 min at 85°C.

### Step b) Preparation of the second mixture

Separately and simultaneously, ethanol and HCl 0.1M were mixed and stirred during 10 min at room temperature.

### Steps c)-d) Combination of the first mixture and the second mixture

Cooling the first mixture until reaching a temperature of 40°C; and after the 10 min of stirring of second mixture, the latter was added to the first mixture; and then, the resulting mixture was stirred for 60 min and then cooled at room temperature and aged for 24h. After that time, ethanol was added to the solution and kept stirring for 30 min to obtain SOL 2.

The amount of the TEOS, aqueous HCl 0.1M solution, ethanol, FAS 21 and polyethylene (20) oxide hexadecyl ether used for the preparation of SOL 2 are those disclosed in the above mentioned Table 1B.

## C. General procedure for the preparation of SOL 3 of Example 5

### Step a) Preparation of the first mixture

TEOS was mixed in an aqueous HCl 0.1M solution in ethanol media. The resultant solution was stirred during 90 min at 60°C.

### Step b) Preparation of the second mixture

Separately and simultaneously, ethanol and HCl 0.1M were mixed and stirred during 10 min at room temperature.

### Steps c) and d) Combination of the first mixture and the second mixture

Cooling the mixture of first mixture until reaching a temperature of 40°C; and after the 10 min of stirring of second mixture, the latter was added to the first mixture; and then, the resulting mixture was stirred for 60 min and then cooled at room temperature and aged for 24h to obtain SOL 3.

The amount of the TEOS, aqueous HCl 0.1M solution and ethanol used for the preparation of SOL 3 are those disclosed in the above mentioned Table 1C.

## D. General procedure for the preparation of comparative SOL 1

The comparative Examples 1-24 were performed following the process as defined in general procedure A disclosed above for the preparation of SOL 1 of the present invention using the amounts and reagents as defined in the Tables 2A-2E.

## 2. Characterisation methods

### 2.A Ellipsometry method:

Ellipsometric parameters $\Psi$ and $\Delta$ of the obtained anti-reflective system coated glasses were recorded by Variable Angle spectroscopic ellipsometer.

Spectra were recorded at wavelength comprised from 300 nm to 1000 nm at three angles of incidence (65°, 70°, 75°). The data analysis was performed with WVase32 software.

The spectra were fitted using the dispersion Cauchy model for obtaining spectral refractive index n and film thickness. The Cauchy's equation establishes an empirical relationship between the refractive index and wavelength of light for transparent materials. Cauchy function for refractive index (n($\lambda$)) and Cauchy function for dielectric constant ($\kappa$($\lambda$)) is calculated by the following equations:

$$\text{Eq. 1} \quad n(\lambda) = A + \frac{B}{\lambda^2} + \frac{C}{\lambda^4}$$

$$\text{Eq. 2} \quad \kappa(\lambda) = D + \frac{E}{\lambda^2} + \frac{F}{\lambda^4}$$

Analysis of ellipsometric parameters with WVase32 software provides coefficients A, B, C, D, E, F and thickness of the coatings.

The Bruggeman effective medium approximation (BEMA) model was used for obtaining void fraction. This effective medium approximation model supposes that effective medium is the same as environment, being the following equation:

$$\text{Eq. 3} \quad c_1 \frac{\tilde{n}_1^2 - \tilde{n}_e^2}{\tilde{n}_1^2 + 2\tilde{n}_e^2} + c_2 \frac{\tilde{n}_2^2 - \tilde{n}_e^2}{\tilde{n}_2^2 + 2\tilde{n}_e^2} = 0$$

wherein: $\tilde{n}_e$ is the complex refractive index of effective medium; $\tilde{n}_{11}$ and $\tilde{n}_2$ are the complex refractive indexes of 1 and 2 media; and $c_1$ and $c_2$ are the volumetric fraction of 1 and 2 media.

Analysis of ellipsometric parameters with WVase32 software provides void fraction, refractive index and thickness of the coatings. The void fraction of each coating was calculated considering polarization factor of 0.33 with respect to pure dense silica, thus value of absolute porosity in % was provided.

Thickness

The thickness of each coating on glass as disclosed in the present invention was calculated by the ellipsometry method as defined above.

Refractive index value

The value of refractive index $n$ at a wavelength of 700 nm, $n_{@700nm}$ of each obtained sol-gel coating on glass was calculated by the ellipsometry method as defined above.

Absolute porosity

The absolute porosity of each coating on glass as disclosed in the present invention was calculated by the ellipsometry method, and modelled with the Bruggeman effective medium approximation (BEMA) as defined above.

**2.B Spectrophotometry method:**

Transmittance spectra

Transmittance spectra of the obtained anti-reflective sol-gel coating stack on glasses were measured with a UV-Vis-NIR spectrophotometer equipped with a 150 mm integrating sphere. Spectra were taken at a wavelength comprised from 300nm and 2000nm with resolution of 5 nm.

Integrated Trasmittance, $\tau_{300-2000}$

Integrated transmittance was calculated by weighting transmittance values with solar spectral irradiance (ASTM G173-03, pages 6-14) according to the following equation:

$$\text{Eq. 4} \qquad \tau = \frac{\int_{\lambda_1}^{\lambda_2} T_\lambda \cdot S_\lambda \, d\lambda}{\int_{\lambda_1}^{\lambda_2} S_\lambda \, d\lambda}$$

wherein $T_\lambda$ is the transmittance spectrum of the covered glass, $S_\lambda$ is the hemispherical solar spectral irradiance for absolute air mass of 1.5 (ASTM G173-03, pages 6-14) and $\lambda_1$ and $\lambda_2$ define the wavelength range, in this case $\lambda_1$ is 300nm and $\lambda_2$ is 2000nm.

Trasmittance gain parameter, % $G_{300\text{-}2000}$

Once integrated transmittance $\tau_{300\text{-}2000}$ values are obtained for both anti-reflective sol-gel coated glasses and bare glass (low iron soda lime silica glass), trasmittance gain parameter ($G_{300\text{-}2000}$ (%)) was calculated by the following Equation:

$$\text{Eq. 5} \qquad G_{300-2000}(\%) = \frac{\tau_{coated\ glass} - \tau_{bare\ glass}}{\tau_{bare\ glass}} \cdot 100$$

## 2.C Durabiliy test

Considering a particular case of outdoor application, damp-heat accelerated aging test was performed following photovoltaics technology standards (IEC 61215 applies for components of silicon photovoltaic modules, damp heat test is explained in pages 73-75; and IEC 62108 does for components of concentrator photovoltaic modules, damp heat test is explained in pages 28-29). The obtained sol-gel anti-reflective coated glasses and bare glass were exposed for 1000h in a climatic chamber at 85 °C and 85% RH conditions (relative humidity conditions). Transmittance spectra of samples at the beginning and at the end of the test were taken as explained above. Transmittance loss parameter ($L_{300\text{-}2000}$ (%)) was calculated for each anti-reflective coating stack by the following Equation:

$$\text{Eq. 6} \qquad L_{300-2000}(\%) = \frac{\tau_{initial} - \tau_{final}}{\tau_{final}} \cdot 100$$

## 3. Anti-reflective sol-gel coated substrates

### 3.A- Single anti-reflective coating on a substrate (MONO-LAYER)

### 3.A.1- General procedure for the preparation of a single anti-reflective coating on a substrate

The process of preparing the anti-reflective mono-layer coating on a substrate is performed by depositing anti-reflective sol-gel coating composition or anti-reflective water-repellent sol-gel coating composition over a glass surface. The deposition can be performed in only one of the sides of the glass, or alternatively over both sides.

- Degreasing and cleaning of the substrate

The degreasing and cleaning of the glass substrate to be coated was performed by immersing the glass substrate in ethanol in an ultrasonic bath.

- Coating deposition and sintering

The degreased and cleaned glass substrate obtained in the previous step was introduced in an anti-reflective sol-gel composition (SOL 1) or alternatively in an anti-reflective water-repellent sol-gel composition (SOL 2) or in a sol-gel comparative composition (comparative SOL 1) and then it was withdrawn at a controlled rate comprised from 2 to 40 cm/min to obtain the coating. Then, coatings were thermal-sintered at a temperature comprised from 240°C to 550°C for a period of time comprised from 30 min to 8h.

Optionally, the obtained coating was submitted to a post treatment with methyl-silylation solution of hexamethyldisilazane (HMDS) in n-propanol. The process for performing this additional layer is as follows:

Glass substrate coated with anti-reflective sol-gel composition (SOL 1) and sintered is immersed in a solution of 50%vol of HMDS in 1-propanol during 4h. Then it is dried at 100°C during 1h.

- Examples of a single anti-reflective coating on a substrate (Mono-layer)

Table 3 shows the experimental conditions of the process for preparing an anti-reflective coating on a substrate as defined above over a 1mm thick soda lime glass slide substrate, and 4mm thick low iron soda lime silica glass substrate by depositing an anti-reflective sol-gel coating composition of the invention or a comparative anti-reflective sol-gel coating composition outside the scope of the invention over one and two of the sides of the glass substrate. All the coatings in the Table 3 have been prepared by dipping method, at a withdrawal rate of 5 cm/min.

Table 3

| Single anti-reflective coating on a substrate | Anti-reflective sol-gel coating compositions | Sintering [a] Temp. (°C) | Post treatment |
|---|---|---|---|
| M1 | Ex.1 | 450 | - |
| M2 | Ex.2 | 450 | - |
| M3 | Ex. 3 | 350 | - |
| M3H | Ex. 3 | 350 | HMDS |
| M4 | Ex. 3 | 450 | - |
| M5 | Ex. 3 | 550 | - |
| M5H | Ex. 3 | 550 | HMDS |
| M6 | Ex.4 | 240 | - |
| Comp. M1 | Ex. Comp. 1 | 450 | - |
| Comp. M2 | Ex. Comp. 2 | 450 | - |
| Comp. M3 | Ex. Comp. 3 | 450 | - |
| Comp. M4 | Ex. Comp. 4 | 450 | - |
| Comp. M5 | Ex. Comp. 5 | 450 | - |
| Comp. M6 | Ex. Comp. 6 | 450 | - |
| Comp. M7 | Ex. Comp. 7 | 450 | - |
| Comp. M8 | Ex. Comp. 8 | 450 | - |
| Comp. M9 | Ex. Comp. 9 | 450 | - |
| Comp. M10 | Ex. Comp. 10 | 450 | - |
| Comp. M11 | Ex. Comp. 11 | 450 | - |
| Comp. M12 | Ex. Comp. 12 | 450 | - |
| Comp. M13 | Ex. Comp. 13 | 450 | - |
| Comp. M14 | Ex. Comp. 14 | 450 | - |
| Comp. M15 | Ex. Comp. 15 | 450 | - |
| Comp. M16 | Ex. Comp. 16 | 450 | - |
| Comp. M17 | Ex. Comp. 17 | 450 | - |
| Comp. M18 | Ex. Comp. 18 | 450 | - |
| Comp. M19 | Ex. Comp. 19 | 450 | - |
| Comp. M20 | Ex. Comp. 20 | 450 | - |
| Comp. M21 | Ex. Comp. 21 | 450 | - |
| Comp. M22 | Ex. Comp. 22 | 450 | - |

(continued)

| Single anti-reflective coating on a substrate | Anti-reflective sol-gel coating compositions | Sintering [a] Temp. (°C) | Post treatment |
|---|---|---|---|
| Comp. M23 | Ex. Comp. 23 | 450 | - |
| Comp. M24 | Ex. Comp. 24 | 450 | - |
| (a) The time of the sintering step after each deposition step is 1hour. | | | |

### 3.A.2- Results corresponding to the anti-reflective mono-layer coating on a substrate

In the following Table 4 are included the results from the fitting of ellipsometric measurements for the mono-layer and the transmittance gain.

Particularly, the table includes the thickness expressed in nm and the reflective index value at a wavelength of 700 nm, $n_{@700nm}$ (both calculated by Cauchy model fitting of spectral ellipsometric parameters as defined above), the absolute porosity expressed in % (by BEMA model fitting of spectral ellipsometric parameters as defined above), and the transmittance gain between 300 nm and 2000 nm (% $G_{300-2000}$) of the obtained anti-reflective sol-gel coating on glasses over bare glass, expressed in %.

Table 4

| Single anti-reflective coating on a substrate | Thickness (nm) | $n_{@700nm}$ | Absolute porosity (%) | % $G_{300-2000}$ One side coated | % $G_{300-2000}$ Two sides coated |
|---|---|---|---|---|---|
| M1 | 127.2 | 1.25 | 43.3 | 2.9 | 6.2 |
| M2 | 117.8 | 1.25 | 43.5 | 3.1 | 6.2 |
| M3 | 121.3 | 1.23 | 47.9 | 3.3 | 6.7 |
| M4 | 118.4 | 1.23 | 46.6 | 2.9 | 6.2 |
| M5 | 122.3 | 1.24 | 47.5 | 2.8 | 6.1 |
| M6 | 125.7 | 1.23 | 49.0 | 3.2 | 6.3 |
| Comp. M1 | 176.1 | 1.42 | 9.7 | 0.9 | 2.0 |
| Comp. M2 | 170.8 | 1.42 | 9.7 | 0.9 | 2.1 |
| Comp. M3 | 220.0 | 1.35 | 23.1 | 1.3 | 2.8 |
| Comp. M4 | 228.1 | 1.35 | 23.1 | 1.3 | 2.7 |
| Comp. M5 | 122.6 | 1.28 | 37.7 | 2.4 | 5.7 |
| Comp. M6 | 88.6 | 1.37 | 18.3 | 1.5 | 2.6 |
| Comp. M7 | 288.1 | 1.31 | 36.6 | -1.0 | -3.1 |
| Comp. M8 | 241.3 | 1.33 | 26.6 | 1.0 | 1.4 |
| Comp. M9 | 323.6 | 1.24 | 46.8 | 2.0 | 4.2 |
| Comp. M10 | 359.7 | 1.24 | 46.9 | 1.8 | 4.1 |
| Comp. M11 | 187.0 | 1.34 | 24.9 | 1.4 | 3.0 |
| Comp. M12 | 254.1 | 1.30 | 31.7 | 2.4 | 3.4 |
| Comp. M13 | 74.0 | 1.43 | 4.3 | 0.9 | 2.1 |
| Comp. M14 | 71.0 | 1.43 | 3.4 | 0.8 | 1.9 |
| Comp. M15 | 211.0 | 1.39 | 11.9 | 0.8 | 1.5 |
| Comp. M16 | - | - | - | 0.4 | 0.3 |
| Comp. M17 | 181.5 | 1.38 | 17.7 | 1.2 | 2.3 |
| Comp. M18 | 203.3 | 1.38 | 16.4 | -0.4 | 0.4 |

(continued)

| Single anti-reflective coating on a substrate | Thickness (nm) | $n_{@700nm}$ | Absolute porosity (%) | % $G_{300-2000}$ One side coated | % $G_{300-2000}$ Two sides coated |
|---|---|---|---|---|---|
| Comp. M19 | 126.9 | 1.32 | 29.0 | 2.5 | 4.5 |
| Comp. M20 | 109.6 | 1.26 | 41.9 | 1.4 | 4.8 |
| Comp. M21 | 255.3 | 1.27 | 40.8 | 1.8 | 2.1 |
| Comp. M22 | 300.8 | 1.24 | 46.0 | 1.8 | 3.9 |
| Comp. M23 | 199.8 | 1.42 | 5.5 | 0.9 | 2.0 |
| Comp. M24 | 323.1 | 1.35 | 21.4 | 1.4 | 3.4 |

The results of the above Table 4 clearly show that only the anti-reflective sol-gel coating composition of the invention allows preparing a porous anti-reflective coating on glass substrate with proper thickness and refractive index values which permits to minimise the optical reflection when light propagates across a boundary between two media with have different refractive indexes (air and glass in this case). Particularly, the anti-reflective sol-gel coating composition of the invention allows preparing a porous anti-reflective coating on glass substrates having a thickness comprised from 115 nm to 130 nm, a refractive index (at wavelength 700 nm) comprised from 1.23 to 1.25 and an absolute porosity comprised from 46.6% to 50%; which are the optimum values for preparing an anti-reflective mono-layer coating. Therefore, the sol-gel coating composition of the invention allows obtaining highest transmittance gain over bare glass, being greater than 6.1% for sol-gel anti-reflective coatings deposited onto two sides of glass and greater than 2.8% for sol-gel anti-reflective coatings deposited onto one side of glass.

**3.B- Anti-reflective multi-layer stack on a substrate**

**3.B.1- General procedure for the preparation of an anti-reflective bi-layer stack on a substrate**

The process of depositing the anti-reflective sol-gel coating composition over a glass surface can be performed in only one of the sides of the glass, or alternatively over both sides.

- Degreasing and cleaning of the substrate

The degreasing and cleaning of the glass substrate to be coated was performed by immersing the glass substrate in ethanol in an ultrasonic bath.

- Coating deposition and sintering

The degreased and cleaned glass substrate obtained in the previous step was first introduced in a sol-gel composition SOL 3 and then it was withdrawn at a controlled rate comprised from 2 cm/min to 40 cm/min to obtain the coating. Then coating was thermal-sintered at a temperature comprised from 350°C to 550°C for a period of time comprised from 30 min to 8h, or alternatively dried at a temperature of 200°C for a period of time of 1 h.
Then, the coated glass substrate obtained above was secondly introduced in an anti-reflective sol-gel composition (SOL 1) or alternatively in an anti-reflective water-repellent sol-gel composition (SOL 2) and then it was withdrawn at a controlled rate comprised from 2 cm/min to 40 cm/min to obtain the bi-layer. Then, the coatings were thermal-sintered at a temperature comprised from 240°C to 700°C for a period of time comprised from 5 min to 8h.
Optionally, the obtained multi-layer is submitted to post treatment with methyl-silylation solution of hexamethyldisilazane (HMDS)/1-propanol. The process for performing this additional layer is as defined in previous section.

- Examples of anti-reflective multi-layer (bi-layer) stacks

Table 5A shows the experimental conditions of the process for preparing an anti-reflective bi-layer stack over a 4mm thick low iron soda lime silica glass by depositing first a sol-gel coating composition SOL 3 followed by a sintering step; and further followed by depositing a sol-gel anti-reflective coating composition SOL 1, or alternatively anti-reflective water-repellent sol-gel coating composition SOL 2, followed by a sintering step. All the anti-reflective coating stacks in Table 5A have been prepared by dipping method, at a withdrawal rate of 5 cm/min.

Table 5A

| Anti-reflective bi-layer stacks | INNER SOL-GEL COATING LAYER | | EXTERNAL SOL-GEL COATING LAYER | | Post treatment |
|---|---|---|---|---|---|
| | Sol-gel coating composition | Sintering [a] Temp. (°C) | Sol-gel coating composition | Sintering [a] Temp. (°C) | |
| B3 | SOL 3 Ex.5 | 350 | SOL 1 Ex.3 | 350 | - |
| B3H | SOL 3 Ex.5 | 350 | SOL 1 Ex.3 | 350 | HMDS |
| B5 | SOL 3 Ex.5 | 550 | SOL 1 Ex.3 | 550 | - |
| B5H | SOL 3 Ex.5 | 550 | SOL 1 Ex.3 | 550 | HMDS |
| B6 | SOL 3 Ex.5 | 550 | SOL 2 Ex.4 | 240 | - |
| (a) The time of the sintering step after each deposition step is 1hour. | | | | | |

Table 5B shows the experimental conditions of the process for preparing an anti-reflective bi-layer stack over a 4mm thick low iron soda lime silica glass by depositing first a sol-gel coating composition SOL 3 followed by a drying step; and further followed by depositing a sol-gel anti-reflective coating composition SOL 1, or alternatively anti-reflective water-repellent sol-gel coating composition SOL 2, followed by a sintering step. All the anti-reflective coating stacks in Table 5B have been prepared by dipping method, at a withdrawal rate of 5 cm/min.

Table 5B

| Anti-reflective bi-layer stacks | INNER SOL-GEL COATING LAYER | | EXTERNAL SOL-GEL COATING LAYER | | Post treatment |
|---|---|---|---|---|---|
| | Sol-gel coating composition | Drying Temp. (°C) / time (min) | Sol-gel coating composition | Sintering Temp. (°C) / time (min) | |
| B7 | SOL 3 Ex. 5 | 200/60 | SOL 1 Ex.3 | 550/60 | - |
| B8 | SOL 3 Ex.5 | 200/60 | SOL 1 Ex.3 | 700/5 | - |

### 3.B.2- Results corresponding to the anti-reflective bi-layer stack on a substrate

In the following Table 6 is included the results from the fitting of ellipsometric measurements for each sol-gel coating composing the bi-layer stacks.

Particularly, the Tables includes the thickness expressed in nm and the reflective index value at a wavelength of 700 nm, $n_{@700nm}$ (calculated by Cauchy model fitting of spectral ellipsometric parameters as defined above); absolute porosity expressed in % (obtained by BEMA model fitting of spectral ellipsometric parameters as defined above).

Table 6

| Anti-reflective bi-layer stack | INNER SOL-GEL COATING LAYER | | EXTERNAL SOL-GEL COATING LAYER | | |
|---|---|---|---|---|---|
| | Thickness (nm) | $n_{@700nm}$ | Thickness (nm) | $n_{@700nm}$ | Absolute porosity (%) |
| B3 | 141.0 | 1.42 | 103.7 | 1.22 | 49.7 |
| B5 | 117.3 | 1.46 | 134.1 | 1.20 | 54.9 |
| B6 | 96.1 | 1.47 | 125.1 | 1.23 | 47.7 |
| B7 | 101.7 | 1.47 | 116.9 | 1.26 | 42.4 |
| B8 | 107.0 | 1.48 | 127.4 | 1.24 | 47.3 |

In the Table 7 is shown the transmittance gain between 300 nm and 2000 nm (% $G_{300-2000}$) of the obtained anti-reflective stack on glasses over bare glass, expressed in %.

Table 7

| Bi-layer Stack | %G$_{300-2000}$ One side coated | %G$_{300-2000}$ Two sides coated |
|---|---|---|
| B3 | 2.6 | 6.9 |
| B5 | 3.0 | 7.0 |
| B6 | 3.0 | 6.9 |
| B7 | - | 7.5 |
| B8 | - | 7.3 |

The results of the above Table 6 clearly show that the bi-layer formed by inner sol-gel coating composition and external anti-reflective sol-gel coating composition of the invention allows preparing an anti-reflective multi-layer (bi-layer) stack on glass substrate with proper thickness and refractive index values which permits to minimise the optical reflection when light propagates across a boundary between two media with have different refractive indexes (air and glass in this case). Particularly, the combination of these two layers permits to prepare anti-reflective multi-layer stack on a substrate wherein the inner layer of the stack has a thickness comprised from 95 nm to 141 nm, refractive index (at wavelength 700 nm) comprised from 1.42 to 1.48, and the external layer of the stack has a thickness comprised from 103 and 135 nm, refractive index (at wavelength 700/632.8 nm) comprised from 1.20 to 1.26 and an absolute porosity comprised from 42.4% to 54.9%.

Indeed, the results of the above Table 7 show that transmittance gain of the anti-reflective bi-layer stacks is slightly superior over the single anti-reflective coating of the present invention. Therefore, the anti-reflective bi-layer stacks deposited with the sol-gel coating compositions of the invention allows obtaining highest transmittance gain over bare glass, being greater than 6.9% for the bi-layer stack deposited onto two sides of glass. Furthermore, as it can be seen in Fig. 1 and Fig. 2, the single anti-reflective (mono-layer) coating and the anti-reflective multi-layer (bi-layer) stacks of the invention provide a transmittance increase in the whole spectral range with respect to the bare substrate, and the anti-reflective multi-layer (bi-layer) stacks provide higher transmittance even than single anti-reflective (mono-layer) coating. Therefore, anti-reflective multi-layer (bi-layer) stacks present superior broadband anti-reflective properties. That means that anti-reflective multi-layer (bi-layer) stack allows to minimise the optical reflection when light propagates across a boundary between two media with have different refractive indexes (air and glass in this case) in a wider wavelength range comprised in solar spectrum.

**4. Water-repellence of sol-gel anti-reflective coating on substrates or anti-reflective multi-layer stacks on substrates with or without hexamethyldisilazane post treatment**

Tables 8 and 9 show water contact angle measured onto the surface of the deposited anti-reflective sol-gel coating composition; or the deposited anti-reflective sol-gel coating composition post treated with HMDS solution as explained above (H), or the deposited anti-reflective water-repellent sol-gel coating composition both in mono-layer and in bi-layer stacks. All the coatings have been prepared over 4mm thick extra clear glass substrate by dipping method, at a withdrawal rate of 5 cm/min.

Table 8 contains the results concerning single anti-reflective coating (mono-layer), and Table 9 contains the results concerning the anti-reflective multi-layer (bi-layer) stacks.

Table 8

| Anti-reflective coating (mono-layer) | Water Contact Angle (°) |
|---|---|
| M3 | 16.6±1.1 |
| M3H | 94.4±1.2 |
| M5 | 19.5±1.4 |
| M5H | 91.1±2.1 |
| M6 | 102.2±1.7 |

Table 9

| Anti-reflective multi-layer (bi-layer) stacks | Water Contact Angle (°) |
|---|---|
| B3 | $20.6 \pm 1.7$ |
| B3H | $96.7 \pm 1.2$ |
| B5 | $34.5 \pm 0.9$ |
| B5H | $95.4 \pm 1.6$ |
| B6 | $93.4 \pm 1.2$ |

Tables 10 and 11 show the transmittance gain between 300 nm and 2000 nm (% $G_{300-2000}$) of the obtained anti-reflective coating (mono-layer) and anti-reflective bi-layer stacks on glasses over bare glass post-treated with HMDS solution, expressed in %.

Table 10 contains the results concerning anti-reflective coating (mono-layer) and Table 11 contains the results concerning anti-reflective multi-layer (bi-layer) stacks.

Table 10

| Mono-layer stack coated | %$G_{300-2000}$ One side coated | %$G_{300-2000}$ Two sides coated |
|---|---|---|
| M3H | 2.7 | 6.2 |
| M5H | 2.5 | 5.8 |

Table 11

| Bi-layer stack coated | %$G_{300-2000}$ One side coated | %$G_{300-2000}$ Two sides coated |
|---|---|---|
| B3H | - | 6.2 |
| B5H | 2.8 | 6.7 |

The results of the above Table 8 and Table 9 clearly show that hydrophobic surfaces repelling water with water contact angles higher than 90° can be obtained both by anti-reflective sol-gel coating compositions post-treated with HMDS solution, and by anti-reflective water-repellent sol-gel coating compositions without posttreatment with HMDS. However, it is important to note that anti-reflective sol-gel coating is deposited in a single step, which is advantageous from the point of view of the industrial process.

The results of the above Table 10 and Table 11 show that transmittance gain of the non-post-treated anti-reflective sol-gel are slightly higher than the anti-reflective sol-gel post-treated coatings.

## 5. Durability test results

Table 12 shows the transmittance loss in the wavelength range comprised from 300 nm to 2000 nm (% $L_{300-2000}$) between initial values and values after 1000h of exposure to durability test of the anti-reflective coating (mono-layer) on a substrate and the anti-reflective multi-layer (bi-layer) stack on a substrate; or of the anti-reflective coating (mono-layer) and anti-reflective multi-layer (bi-layer) stacks post-treated with HMDS solution as explained above (H); or anti-reflective water-repellent coating (mono-layer) and anti-reflective water-repellent multi-layer (bi-layer) stacks on a substrate. All the coatings and stacks on the substrates have been prepared over 4mm thick low iron soda lime silica glass substrate by dipping method, at a withdrawal rate of 5 cm/min.

Table 12 contains the results concerning the anti-reflective coatings (mono-layer), and the anti-reflective bi-layer stacks.

Table 12

| Anti-reflective system | % $L_{300-2000}$ after Damp Heat Test |
|---|---|
| M5H | 1.6 |
| B3 | 0.8 |

(continued)

| Anti-reflective system | % L$_{300-2000}$ after Damp Heat Test |
|---|---|
| B3H | 0.1 |
| B5 | 0.1 |
| B5H | 0 |
| B6 | 0.1 |

The results of the above Table 12 show that transmittance loss along the durability test is very low and acceptable.

**6. Conclusion**

The above mentioned results clearly show that the anti-reflective sol-gel coating compositions of the present invention permit to obtain single anti-reflective coating and anti-reflective multi-layer stacks that provide enhanced anti-reflective properties over a broad wavelength region with regard to sol-gel coatings of the state of the art. Furthermore, anti-reflective and water-repellent sol-gel coatings of the present invention permit to obtain hydrophobic surfaces without detrimental effects on optical performance in a single step.

Functionalisation post-treatments in controlled conditions can further be applied on the anti-reflective systems of the present invention. Anti-reflective systems composed by single coating or multiple layer stack of the present invention on a substrate, show a good performance regarding durability properties, particularly the anti-reflective (bi-layer) stack of the present invention.

The results of the Tables above clearly show that the single sol-gel anti-reflective coating on glass substrate and the sol-gel anti-reflective multi-layer stack on a substrate of the present invention have a higher durability than the sol-gel of the state of the art, particularly the anti-reflective (bi-layer) stack of the present invention.

The above mentioned results clearly show that in comparison with the sol-gel coatings disclosed in the state of the art, the sol-gel coating compositions of the present invention allows preparing a sol-gel coating and stacks having exceptional broad band anti-reflective properties and having also a good performance regarding durability properties.

7. Comparative composition

7.1 Composition of the comparative sol-gel coating compositions

Table 13 show the quantitative components intervening in the preparation of the comparative sol-gel coating compositions outside the scope of the present invention, where the amount of the ingredients is expressed in molar ratio.

Table 13

| Ingredients | | Comparative Examples | | | |
|---|---|---|---|---|---|
| **Function** | **Name** | **25** | **26** | **27**[a] | **28**[a] |
| Hydrolysable silicon alkoxide | TEOS | 1 | 1 | 1 | 1 |
| An aqueous solution of at least an acid catalyst | HCl 0.1M | 2.7 | 8 | 8 | 8 |
| Surfactant | polyethylene (20) oxide hexadecyl ether (Brij58) | 0.1233 (77.6 g/L) | 0.1233 (77.6 g/L) | 0.1233 (77.6 g/L) | 0.1233 (77.6 g/L) |
| (C$_1$-C$_8$)alcohol | ethanol | 6.1 | 12.2 | 24.4 | 24.4 |
| (a) the processes for the preparation of the comparative sol-gel coating compositions of comparative examples 27 and 28 are different. | | | | | |

7.2 Preparation process

A. Procedure for the preparation of the comparative sol-gel coating compositions of comparative Example 25

The process for the preparation of the comparative Example 25 involves preparing a unique SOL having the molar ratio of the components disclosed in Table 13, which corresponds to perform step (a) of the process of the invention. Thus, this process does not involve performing steps (b), (c) and (d).

TEOS and the polyethylene (20) oxide hexadecyl ether were mixed in an aqueous HCl 0.1M solution in ethanol media. The resultant solution was stirred during 90 min at 60°C. After that time the sol is cooled at room temperature and aged for 24h. The molar ratio of TEOS, aqueous HCl 0.1M solution, ethanol and polyethylene (20) oxide hexadecyl ether used is 1:2.7:6.1:0.1233 as disclosed in the Table 13.

B. Procedure for the preparation of the comparative sol-gel coating compositions of comparative Example 26

The process for the preparation of the comparative Example 26 involves preparing a unique SOL having the molar ratio of the components disclosed in Table 13 by mixing the amount of ethanol corresponding to the sum of the amount of ethanol used in step (a) and (b) in a single addition; and also the amount of the acid catalyst corresponding to the sum of the amount of the acid catalyst used in step (a) and (b) in a single addition. Thus, this process does not involve performing steps (b), (c) and (d).

TEOS and the polyethylene (20) oxide hexadecyl ether were mixed in an aqueous HCl 0.1M solution in ethanol media. The resultant solution was stirred during 90 min at 60°C. After that time the sol is cooled at room temperature and aged for 24h. The molar ratio of TEOS, aqueous HCl 0.1M solution, ethanol and polyethylene (20) oxide hexadecyl ether used is 1:8:12.2:0.1233 as disclosed in the Table 13.

C. Procedure for the preparation of the comparative sol-gel coating compositions of comparative Example 27

The process for the preparation of the comparative Example 27 involves preparing a SOL 1 according to step (a) of the present invention, and then adding directly to the SOL1 the amount of ethanol and acid catalyst used in step (b) of the process of the present invention without the preparation of the second mixture (SOL2). Thus, this process does not involve performing steps (b), (c) and (d).

TEOS, and the polyethylene (20) oxide hexadecyl ether were mixed in an aqueous HCl 0.1M solution in ethanol media. The resultant solution was stirred during 90 min at 60°C. After that time sol is cooled at room temperature and aged for 24h to obtain SOL1. The molar ratio of TEOS, aqueous HCl 0.1M solution, ethanol and polyethylene (20) oxide hexadecyl ether used for the preparation of the SOL1 is 1:8:12.2:0.1233.

Then, ethanol was added to the solution and kept stirring for 30 min to obtain SOL 1. The amount of the TEOS, aqueous HCl 0.1M solution, ethanol and polyethylene (20) oxide hexadecyl ether used for the preparation of the final SOL is 1:8:24.4:0.1233 as disclosed in the Table 13.

C. Procedure for the preparation of the comparative sol-gel coating compositions of comparative Example 28

The process for the preparation of the comparative Example 28 involves preparing a unique SOL having the molar ratio of the components disclosed in Table 13 by mixing the amount of ethanol corresponding to the sum of ethanol used in steps (a), (b), and (d) in a single addition and also by mixing the amount of acid catalyst corresponding to the sum of acid catalyst used in steps (a) and (b) in a single addition. Thus, this process does not involve performing steps (b), (c) and (d).

TEOS, and the polyethylene (20) oxide hexadecyl ether were mixed in an aqueous HCl 0.1M solution in ethanol media. The resultant solution was stirred during 90 min at 60°C. After that time the sol is cooled at room temperature and aged for 24h. The molar ratio of TEOS, aqueous HCl 0.1M solution, ethanol and polyethylene (20) oxide hexadecyl ether used is 1:8:24.4:0.1233 as disclosed in the Table 13.

7.3- Single anti-reflective coating on a substrate (MONO-LAYER)

The process of preparing the anti-reflective mono-layer coating on a substrate is performed by depositing the comparative anti-reflective sol-gel coating compositions 25-28 over a glass surface. The deposition is performed over one and two of the sides of the glass substrate

The process for the preparation of the single anti-reflective coating on a substrate is the process as disclosed in section 3.A.1 of the present invention but using the comparative sol-gel coating compositions 25-28 as defined in previous section.

Table 14 shows the experimental conditions of the process for preparing of an anti-reflective coating (M1-M6) or an comparative anti-reflective coating (M25-M29) on a substrate as defined above over a 4mm thick low iron soda lime silica glass substrate by depositing a comparative anti-reflective sol-gel coating composition outside the scope of the invention over one and two of the sides of the glass substrate. All the coatings in the Table 14 have been prepared by dipping method, at a withdrawal rate of 5 cm/min.

Table 14

| Single anti-reflective coating on a substrate | Anti-reflective sol-gel coating compositions | Sintering [a] Temp. (°C) |
|---|---|---|
| M1 | Ex.1 | 450 |
| M2 | Ex. 2 | 450 |
| M3 | Ex. 3 | 350 |
| M4 | Ex. 3 | 450 |
| M5 | Ex. 3 | 550 |
| M6 | Ex.4 | 240 |
| Comp. Ex. M25 | Ex. Comp. 25 | 550 |
| Comp. Ex. M26 | Ex. Comp. 26 | 550 |
| Comp, Ex. M27 | Ex. Comp. 27 | 550 |
| Comp. Ex. M28 | Ex. Comp. 28 | 550 |
| (a) the time of the sintering step after each deposition step is 1 hour | | |

7.4- Results corresponding to the anti-reflective mono-layer coating on a substrate

In the following Table 15 are included the results from the fitting of ellipsometric measurements for the mono-layer and the transmittance gain.

Particularly, the table includes the thickness expressed in nm and the reflective index value at a wavelength of 700 nm, $n_{@700nm}$ (both calculated by Cauchy model fitting of spectral ellipsometric parameters as defined above), the absolute porosity expressed in % (by BEMA model fitting of spectral ellipsometric parameters as defined above), and the transmittance gain between 300 nm and 2000 nm (% $G_{300-2000}$) of the obtained anti-reflective sol-gel coating on glasses over bare glass, expressed in %.

Table 15

| Single anti-reflective coating on a substrate | Thickness (nm) | $n_{@700nm}$ | Absolute porosity (%) | % $G_{300-2000}$ One side coated | % $G_{300-2000}$ Two sides coated |
|---|---|---|---|---|---|
| M1 | 127.2 | 1.25 | 43.3 | 2.9 | 6.2 |
| M2 | 117.8 | 1.25 | 43.5 | 3.1 | 6.2 |
| M3 | 121.3 | 1.23 | 47.9 | 3.3 | 6.7 |
| M4 | 118.4 | 1.23 | 46.6 | 2.9 | 6.2 |
| M5 | 122.3 | 1.24 | 47.5 | 2.8 | 6.1 |
| M6 | 125.7 | 1.23 | 49.0 | 3.2 | 6.3 |
| Comp. Ex. M25 | 398.9 | 1.26 | 40.41 | 2.3 | 4.2 |
| Comp. Ex. M26 | 190.2 | 1.32 | 27.8 | 2.5 | 4.8 |
| Comp. Ex. M27 | 110.0 | 1.29 | 35.6 | 2.3 | 4.6 |
| Comp. Ex. M28 | 107.8 | 1.30 | 33.2 | 2.6 | 3.9 |

The results of the above Table 15 clearly show that the process for the preparing of the anti-reflective sol-gel coating composition of the invention allows obtaining a porous anti-reflective coating on glass substrates having a thickness comprised from 115 nm to 130 nm and a highest transmittance gain over bare glass, being greater than 6.1% for sol-gel anti-reflective coatings deposited onto two sides of glass and greater than 2.8% for sol-gel anti-reflective coatings deposited onto one side of glass. In comparison, the comparative sol-gel coating compositions, which has been prepared by a process not having steps (a)-(d), do not allow preparing porous anti-reflective coating on glass substrates having a thickness comprised from 115 nm to 130 nm and a transmittance gain over bare glass greater than 6.1% for two sides deposition and greater than 2.8% for deposition onto one side of the glass.

Furthermore, comparative single anti-reflective coating on a substrate of comparative Example M28 does not show homogeneity on the surface, since it exhibited defects such as craters and holes appreciated with naked eye.

REFERENCES CITED IN THE APPLICATION

1. ASTM C1048. Standard specification for heat-strengthened and fully tempered flat glass
2. EN 12150. Glass in building - Thermally toughened soda lime silicate safety glass
3. ASTM G173-03. Standard tables for reference solar spectral irradiances: direct normal and hemispherical on 37° tilted surface, pp. 6-14.
4. IEC 61215:2005. Crystalline silicon terrestrial photovoltaic (PV) modules - Design, qualification and type approval, pp. 73-75
5. IEC 62108:2016. Concentrator photovoltaic (CPV) modules and assemblies - Design, qualification and type approval, pp. 28-29

**Claims**

1. A process for preparing an anti-reflective sol-gel coating composition comprising:

   a) first mixing a hydrolysable silicon alkoxide, one or more $(C_1\text{-}C_8)$alcohols, an aqueous solution of at least one acid catalyst; and one or more surfactants of formula (II):

   $$HO(CH_2CH_2O)_mR^9 \qquad (II)$$

   then maintaining the resulting mixture at a temperature comprised from 50°C to 120°C for an appropriate period of time; and finally cooling the mixture until reaching a temperature comprised from 30°C to 50°C, wherein: $R^9$ is $(C_1\text{-}C_{30})$alkyl, and m is an integer selected from 2 to 40; the concentration of the surfactant of formula (II) in the resulting first mixture is comprised from 150 g/L to 300 g/L; the molar ratio between the hydrolysable silicon alkoxide and the aqueous solution of acid catalyst is comprised from 0.15 to 1; and the molar ratio between the hydrolysable silicon alkoxide and the $(C_1\text{-}C_8)$alcohol is comprised from 0.15 to 0.30, and the molar ratio between the hydrolysable silicon alkoxide and the surfactant of formula (II) is comprised from 7 to 11.5;
   b) preparing a second mixture by mixing one or more $(C_1\text{-}C_8)$alcohols, and an aqueous solution of at least one acid catalyst; and maintaining the resulting mixture at a temperature comprised from 15°C to 30°C;
   c) adding the second mixture obtained in step b) to the resulting mixture of step a); and maintaining the resulting mixture at a temperature comprised from 30°C to 50°C for an appropriate period of time; and
   d) cooling the resulting mixture obtained in step c) until reaching a temperature comprised from 15°C to 30°C; and adding one or more $(C_1\text{-}C_8)$alcohols until the molar ratio between the hydrolysable silicon alkoxide and the $(C_1\text{-}C_8)$alcohol in the anti-reflective sol-gel coating composition is comprised from 0.025 to 0.100
   wherein:
   the concentration of the surfactant of formula (II) in the anti-reflective sol-gel coating composition is comprised from 55 g/L to 90 g/L, the molar ratio between the hydrolysable silicon alkoxide and the aqueous solution of at least one acid catalyst is comprised from 0.050 to 0.350, and the molar ratio between the hydrolysable silicon alkoxide and the surfactant of formula (II) is comprised from 7 to 11.5.

2. The process according to claim 1, wherein the surfactant of formula (II) is polyethylene (20) oxide hexadecyl ether.

3. The process according to any of the claims 1-2, wherein the hydrolysable silicon alkoxide is selected from the group consisting of:

i) a totally hydrolysable silicon alkoxide of formula (IA)

$$Si(OR^1)(OR^2)(OR^3)(OR^4) \qquad (IA)$$

ii) an alkylalkoxide having at least one non-hydrolysable substituent being the non-hydrolysable substituent a substituted or un-substituted $(C_1-C_4)$alkyl of formula (IB)

$$R^8\text{-}Si(OR^5)(OR^6)(OR^7) \qquad (IB)$$

and iii) a mixture of at least a totally hydrolysable silicon alkoxide of formula (IA) and at least an alkylalkoxide having at least one non-hydrolysable substituent being the non-hydrolysable substituent a substituted or un-substituted $(C_1-C_4)$alkyl of formula (IB); wherein: each one of $R^1$, $R^2$, $R^3$, $R^4$, $R^5$, $R^6$ and $R^7$ are independently selected from the group consisting of a substituted or un-substituted $(C_1-C_{14})$alkyl, $(C_5-C_6)$aryl, $(C_2-C_{14})$alkenyl and $(C_2-C_{14})$alkynyl group; and $R^8$ is a substituted or un-substituted $(C_1-C_4)$alkyl.

4. The process according to any of the claims 1-3, wherein the aqueous solution of the at least one acid catalyst is an aqueous solution of an inorganic acid selected from the group consisting of $H_2SO_4$, HCl, $HNO_3$, and mixtures thereof having a pH lower than 5.

5. The process according to any of the claims 1-4, wherein the $(C_1-C_8)$alcohol is selected from the group consisting of ethanol, butanol, propanol, and mixtures thereof.

6. The process according to any of the claims 1-5, wherein the molar ratio between the hydrolysable silicon alkoxide, the aqueous solution of at least one acid catalyst, the $(C_1-C_8)$alcohol and the surfactant of formula (II) in the resulting mixture of step a) is 1:8:24.4:0.12.

7. The process according to any of the claims 1-6, wherein the process for preparing the anti-reflective sol-gel coating composition further comprises adding a silicon precursor having at least one non-hydrolysable substituent bonded to the silicon atom to the initial mixture of step a).

8. The process according to claim 7, wherein the silicon precursor having at least one non-hydrolysable substituent bonded to the silicon atom is a compound of formula (III):

$$[CF_3\text{-}(CF_2)_n(CH_2)_m]_a\text{-}Si(OR^{10})_b \qquad (III)$$

wherein each $R^{10}$ is independently selected from the group consisting of $(C_1-C_{20})$alkyl, $(C_2-C_{20})$alkenyl and $(C_2-C_{20})$alkyl-CH=CH-; m and n are independently an integer comprised from 0 to 20, a is an integer selected from 1, 2 and 3; b is an integer selected from 1, 2, and 3; the sum of a+b is 4; or alternatively a compound of formula (IV):

$$[CF_3\text{-}(CF_2)_n(CH_2)_m]_a\text{-}SiX_b \qquad (IV)$$

wherein each X is an halogen independently selected from the group consisting of chlorine, bromine and iodine; m and n are independently an integer comprised from 0 to 20, a is an integer selected from 1, 2 and 3; b is an integer selected from 1, 2, and 3; the sum of a+b is 4; or alternatively a compound of formula (V)

$$(R^{11})_a Si(OR^{12})_b \qquad (V)$$

wherein each $R^{11}$ and each $R^{12}$ is independently selected from the group consisting of $(C_1-C_{20})$alkyl, $(C_2-C_{20})$alkenyl and $(C_2-C_{20})$alkyl-CH=CH-; a is an integer selected from 1, 2 and 3; b is an integer selected from 1, 2, and 3; the sum of a+b is 4; or alternatively a compound of formula (VI)

$$[CH_3\text{-}(CH_2)_m]_a\text{-}SiX_b \qquad (VI)$$

wherein each X is an halogen independently selected from the group consisting of chlorine, bromine and iodine; m is an integer comprised from 0 to 20, a is an integer selected from 1, 2 and 3; b is an integer selected from 1, 2, and 3; the sum of a+b is 4.

9. An anti-reflective sol-gel coating composition obtainable by the process as defined in any of the claims 1-6.

10. An anti-reflective water-repellent sol-gel coating composition obtainable by the process as defined in any of the claims 7-8.

11. A process for preparing a single anti-reflective coating on a substrate which comprises:

> e) depositing a mono-layer of the anti-reflective sol-gel coating composition as defined in claim 9 or alternatively, of the anti-reflective water-repellent sol-gel coating composition as defined in claim 10 over the substrate; and
> f) sintering the coating obtained in step e); and optionally
> the process further comprises additional step i) after step f); or alternatively
> the process further comprises additional step ii) after step f); or alternatively
> the process further comprises additional step i) after step f) followed by step ii); or alternatively the process further comprises additional step ii) after step f) followed by step i);
> wherein:

>> step i) comprises depositing one or more additional coating over the external coating of the substrate; and
>> step ii) comprises surface functionalization of the external coating of the substrate.

12. A process for preparing an anti-reflective multilayer stack on a substrate which comprises:

> g) firstly, depositing a first inner layer over the substrate by a process which comprises:

>> g1) providing a sol-gel coating composition obtainable by a process which comprises:

>>> g1a) first mixing an hydrolysable silicon alkoxide, one or more $(C_1-C_8)$alcohols, and an aqueous solution of at least one acid catalyst; and then maintaining the resulting mixture at a temperature comprised from 50°C to 70°C for an appropriate period of time; and finally cooling the mixture until reaching a temperature comprised from 30°C to 50°C.
>>> g1b) preparing a second mixture by mixing one or more $(C_1-C_8)$alcohols, and an aqueous solution of at least one acid catalyst; and maintaining the resulting mixture at a temperature comprised from 15°C to 30°C for an appropriate period of time;
>>> g1c) adding the second mixture obtained in step g1b) to the resulting mixture of step g1a); and maintaining the resulting mixture at a temperature comprised from 30°C to 50°C for an appropriate period of time;

>> g2) depositing the sol-gel coating composition over the substrate; and
>> g3) drying or sintering the coating obtained in step g2); and

> h) secondly, depositing an external anti-reflective layer over the inner layer on the substrate, by a process which comprises:

>> h1) depositing the anti-reflective sol-gel coating composition as defined in claim 9 or alternatively, the anti-reflective water-repellent sol-gel coating composition as defined in claim 10, over the inner layer on the substrate;
>> h2) sintering the coating obtained in step h1); and optionally;
>> the process further comprises an additional step i) after step h); or alternatively
>> the process further comprises additional step ii) after step h); or alternatively
>> the process further comprises additional step i) after step h) followed by step ii); or alternatively
>> the process further comprises additional step ii) after step h) followed by step i); wherein:

>>> step i) comprises depositing one or more additional coating over the external coating of the substrate; and
>>> step ii) comprises surface functionalization of the external coating of the substrate.

13. The process according to any of the claims 11-12, wherein the depositing steps are performed by dipping the substrate in the coating composition at a deposition rate comprised from 2 cm/min to 40cm/min; and the sintering steps are performed at a temperature comprised from 200°C to 700°C for an appropriate period of time.

14. A single anti-reflective coating on a substrate or an anti-reflective multilayer stack on a substrate obtainable by the process as defined in any of the claims 11-13.

15. The single anti-reflective coating on a substrate according to claim 14, wherein the mono-layer coating has a thickness comprised from 100 nm to 140 nm and a refractive index comprised from 1.20 to 1.26 at a wavelength of 700 nm which is obtainable by the process as defined in claim 11 wherein the hydrolysable silicon alkoxide is tetraethylorthosilicate (TEOS), the $(C_1-C_8)$alcohol is ethanol, the acid catalyst is an aqueous acidic solution of HCl, and the surfactant of formula (II) is polyethylene (20) oxide hexadecyl ether; or alternatively

the anti-reflective multilayer stack on a substrate according to claim 14, which is an anti-reflective bi-layer stack wherein the external layer of the stack has a thickness comprised from 100 nm to 140 nm and a refractive index comprised from 1.20 to 1.26 at a wavelength of 700 nm; and the inner layer of the stack has a thickness comprised from 95 nm to 150 nm and a refractive index comprised from 1.42 to 1.48 at a wavelength of 700 nm, which is obtainable by the process as defined in claim 12, wherein the hydrolysable silicon alkoxide is tetraethylorthosilicate (TEOS), the $(C_1-C_8)$alcohol is ethanol, the acid catalyst is an aqueous acidic solution of HCl, and the surfactant of formula (II) is polyethylene (20) oxide hexadecyl ether.

**Patentansprüche**

1. Ein Verfahren zur Herstellung einer anti-reflektierenden Sol-Gel-Beschichtungszusammensetzung umfassend:

a) erstens das Mischen von einem hydrolysierbaren Siliciumalkoxid, einem oder mehreren $(C_1-C_8)$-Alkoholen, einer wässrigen Lösung von mindestens einem sauren Katalysator; und einem oder mehreren Tensiden der Formel (II):

$$HO(CH_2CH_2O)_m R^9 \qquad (II)$$

daraufhin das Behalten der resultierenden Mischung bei einer Temperatur, die von 50 °C bis 120 °C reicht, während eines geeigneten Zeitraums; und schließlich das Abkühlen der Mischung, bis eine Temperatur von 30 °C bis 50 °C erreicht wird, wobei:
$R^9$ $(C_1-C_{30})$-Alkyl ist, und m eine Ganzzahl ausgewählt von 2 bis 40 ist; wobei die Konzentration des Tensids der Formel (II) in der entstandenen ersten Mischung von 150 g/L bis 300 g/L reicht; wobei das Molverhältnis von dem hydrolysierbaren Siliciumalkoxid zu der wässrigen Lösung von saurem Katalysator von 0,15 bis 1 reicht; und wobei das Molverhältnis von dem hydrolysierbaren Siliciumalkoxid zu dem $(C_1-C_8)$-Alkohol von 0,15 bis 0,30 reicht, und wobei das Molverhältnis von dem hydrolysierbaren Siliciumalkoxid zu dem Tensid der Formel (II) von 7 bis 11,5 reicht;
b) das Zubereiten von einer zweiten Mischung, indem ein oder mehrere $(C_1-C_8)$-Alkohole, und eine wässrige Lösung von mindestens einem sauren Katalysator gemischt werden; und das Behalten der resultierenden Mischung bei einer Temperatur, die von 15 °C bis 30 °C reicht;
c) das Hinzufügen der in Schritt b) erhaltenen zweiten Mischung der aus dem Schritt a) resultierenden Mischung; und das Behalten der resultierenden Mischung bei einer Temperatur, die von 30 °C bis 50 °C reicht, während eines geeigneten Zeitraums; und
d) das Abkühlen der resultierenden Mischung, die in Schritt c) erhalten wird, bis eine Temperatur reichend von 15 °C bis 30 °C erreicht wird; und das Hinzufügen von einem oder mehreren $(C_1-C_8)$-Alkoholen, bis das Molverhältnis von dem hydrolysierbaren Siliciumalkoxid zu dem $(C_1-C_8)$-Alkohol in der anti-reflektierenden Sol-Gel-Beschichtungszusammensetzung von 0,025 bis 0,100 reicht,
wobei:
de Konzentration des Tensids der Formel (II) in der anti-reflektierenden Sol-Gel-Beschichtungszusammensetzung von 55 g/L bis 90 g/L reicht, wobei das Molverhältnis von dem hydrolysierbaren Siliciumalkoxid zu der wässrigen Lösung von mindestens einem sauren Katalysator von 0,050 bis 0,350 reicht, und das Molverhältnis von dem hydrolysierbaren Siliciumalkoxid zum Tensid der Formel (II) von 7 bis 11,5 reicht.

2. Das Verfahren nach Anspruch 1, wobei das Tensid der Formel (II) Polyethylen-(20)-oxidhexadecylether ist.

3. Das Verfahren nach einem der Ansprüche 1-2, wobei das hydrolysierbare Siliciumalkoxid ausgewählt ist aus der Gruppe bestehend aus:

i) einem vollständig hydrolysierbaren Siliciumalkoxid der Formel (IA)

$$Si(OR^1)(OR^2)(OR^3)(OR^4) \qquad (IA)$$

ii) einem Alkylalkoxid, das mindestens einen nicht hydrolysierbaren Substituenten hat, wobei der nicht hydrolysierbare Substituent ein substituiertes oder unsubstituiertes $(C_1-C_4)$-Alkyl der Formel (IB) ist

$$R^8-Si(OR^5)(OR^6)(OR^7) \qquad (IB)$$

und iii) einer Mischung aus mindestens einem vollständig hydrolysierbaren Siliciumalkoxid der Formel (IA) und mindestens einem Alkylalkoxid, das mindestens einen nicht hydrolysierbaren Substituenten hat, wobei der nicht hydrolysierbare Substituent ein substituiertes oder unsubstituiertes $(C_1-C_4)$-Alkyl der Formel (IB) ist; wobei: jedes von $R^1$, $R^2$, $R^3$, $R^4$, $R^5$, $R^6$ und $R^7$ unabhängig voneinander ausgewählt sind aus der Gruppe bestehend aus substituierter oder unsubstituierter $(C_1-C_{14})$-Alkyl-, $(C_5-C_6)$-Aryl-, $(C_2-C_{14})$-Alkenyl- und $(C_2-C_{14})$-Alkynylgruppe; und $R^8$ ein substituiertes oder unsubstituiertes $(C_1-C_4)$-Alkyl ist.

4. Das Verfahren nach einem der Ansprüche 1-3, wobei die wässrige Lösung von dem mindestens einen sauren Katalysator eine wässrige Lösung von einer anorganischen Säure ist, die ausgewählt aus der Gruppe bestehend aus $H_2SO_4$, HCl, $HNO_3$, und Mischungen davon ist und einen pH-Wert von weniger als 5 hat.

5. Das Verfahren nach einem der Ansprüche 1-4, wobei der $(C_1-C_8)$-Alkohol ausgewählt aus der Gruppe bestehend aus Ethanol, Butanol, Propanol und Mischungen davon ist.

6. Das Verfahren nach einem der Ansprüche 1-5, wobei das Molverhältnis von dem hydrolysierbaren Siliciumalkoxid, zu der wässrigen Lösung von mindestens einem sauren Katalysator, zum $(C_1-C_8)$-Alkohol und zum Tensid der Formel (II) in der resultierenden Mischung des Schritts a) 1:8:24,4:0,12 beträgt.

7. Das Verfahren nach einem der Ansprüche 1-6, wobei das Verfahren zur Herstellung der anti-reflektierenden Sol-Gel-Beschichtungszusammensetzung weiterhin das Hinzufügen zu der Anfangsmischung von Schritt a) von einem Silicium-Präkursor umfasst, der mindestens einen nicht hydrolysierbaren Substituenten hat, der an das Siliciumatom gebunden ist.

8. Das Verfahren nach Anspruch 7, wobei der Silicium-Präkursor, der mindestens einen nicht hydrolysierbaren Substituenten hat, der an das Siliciumatom gebunden ist, eine Verbindung der Formel (III) ist:

$$[CF_3-(CF_2)_n(CH_2)_m]_a-Si(OR^{10})_b \qquad (III)$$

wobei jedes $R^{10}$ unabhängig voneinander ausgewählt ist aus der Gruppe bestehend aus $(C_1-C_{20})$-Alkyl, $(C_2-C_{20})$-Alkenyl und $(C_2-C_{20})$-Alkyl-CH=CH-; m und n unabhängig voneinander eine Ganzzahl sind, die von 0 bis 20 reicht, a eine Ganzzahl ist, die ausgewählt ist aus 1, 2 und 3; b eine Ganzzahl ist, die ausgewählt ist aus 1, 2, und 3; wobei die Summe von a+b = 4 ist; oder ersatzweise
eine Verbindung der Formel (IV):

$$[CF_3-(CF_2)_n(CH_2)_m]_a-SiX_b \qquad (IV)$$

wobei jedes X ein Halogen ist, das unabhängig voneinander ausgewählt ist aus der Gruppe bestehend aus Chlor, Brom und Jod; m und n unabhängig voneinander eine Ganzzahl sind, die von 0 bis 20 reicht, a eine Ganzzahl ist, die ausgewählt ist aus 1, 2 und 3; b eine Ganzzahl ist, die ausgewählt ist aus 1, 2, und 3; wobei die Summe von a+b = 4 ist; oder ersatzweise
eine Verbindung der Formel (V) ist

$$(R^{11})_a Si(OR^{12})_b \qquad (V)$$

wobei jedes $R^{11}$ und jedes $R^{12}$ unabhängig voneinander ausgewählt ist aus der Gruppe bestehend aus $(C_1-C_{20})$-Alkyl, $(C_2-C_{20})$-Alkenyl und $(C_2-C_{20})$-Alkyl-CH=CH-; a eine Ganzzahl ist, die ausgewählt ist aus 1, 2 und 3; b eine Ganzzahl ist, die ausgewählt ist aus 1, 2, und 3; wobei die Summe von a+b = 4 ist; oder ersatzweise eine Verbindung der Formel (VI) ist

$$[CH_3-(CH_2)_m]_a-SiX_b \qquad (VI)$$

wobei jedes X ein Halogen ist, das unabhängig voneinander ausgewählt ist aus der Gruppe bestehend aus Chlor, Brom und Jod; m eine Ganzzahl ist, die von 0 bis 20 reicht, a eine Ganzzahl ist, die ausgewählt ist aus 1, 2 und 3; b eine Ganzzahl ist, die ausgewählt ist aus 1, 2, und 3; wobei die Summe von a+b = 4 ist.

9. Eine anti-reflektierende Sol-Gel-Beschichtungszusammensetzung, die durch das Verfahren wie in einem der Ansprüche 1-6 definiert erhalten werden kann.

10. Eine anti-reflektierende wasserabweisende Sol-Gel-Beschichtungszusammensetzung, die durch das Verfahren wie in einem der Ansprüche 7-8 definiert erhalten werden kann.

11. Ein Verfahren zur Herstellung von einer einzigen anti-reflektierenden Beschichtung auf einem Substrat, das folgendes umfasst:

> e) das Auflegen von einer Monolage der anti-reflektierenden Sol-Gel-Beschichtungszusammensetzung wie in Anspruch 9 definiert oder, ersatzweise, der anti-reflektierenden wasserabweisenden Sol-Gel-Beschichtungszusammensetzung wie in Anspruch 10 definiert über den Substrat; und
> f) das Sintern der in Schritt e) erhaltenen Beschichtung; und wahlweise
> wobei das Verfahren weiterhin den zusätzlichen Schritt i) nach dem Schritt f) umfasst; oder ersatzweise wobei das Verfahren weiterhin den zusätzlichen Schritt ii) nach dem Schritt f) umfasst; oder ersatzweise wobei das Verfahren weiterhin den zusätzlichen Schritt i) nach dem Schritt f), gefolgt von dem Schritt ii) umfasst; oder ersatzweise
> wobei das Verfahren weiterhin den zusätzlichen Schritt ii) nach dem Schritt f), gefolgt von dem Schritt i) umfasst; wobei:

>> der Schritt i) das Auflegen von einer oder mehreren zusätzlichen Beschichtungen über die äußere Beschichtung des Substrats umfasst; und
>> der Schritt ii) die Oberflächenfunktionalisierung der äußeren Beschichtung des Substrats umfasst.

12. Ein Verfahren zur Herstellung von einem anti-reflektierenden Mehrlagenstapel auf einem Substrat, das folgendes umfasst:

> g) erstens, das Auflegen von einer ersten inneren Lage über den Substrat mittels eines Verfahrens, das folgendes umfasst:

>> g1) das Bereitstellen von einer Sol-Gel-Beschichtungszusammensetzung, die mittels eines Verfahrens erhalten werden kann, das folgendes umfasst:

>>> g1a) erstens das Mischen von einem hydrolysierbaren Siliciumalkoxid, einem oder mehreren $(C_1-C_8)$-Alkoholen, und einer wässrigen Lösung von mindestens einem sauren Katalysator; und daraufhin das Behalten der resultierenden Mischung bei einer Temperatur, die von 50 °C bis 70 °C reicht, während eines geeigneten Zeitraums; und schließlich das Abkühlen der Mischung, bis eine Temperatur reichend von 30 °C bis 50 °C erreicht wird.
>>> g1b) das Zubereiten von einer zweiten Mischung, indem ein oder mehrere $(C_1-C_8)$-Alkohole, und eine wässrige Lösung von mindestens einem sauren Katalysator gemischt werden; und das Behalten der resultierenden Mischung bei einer Temperatur, die von 15 °C bis 30 °C reicht, während eines geeigneten Zeitraums;
>>> g1c) das Hinzufügen der im Schritt g1b) erhaltenen zweiten Mischung der aus dem Schritt g1a) resultierenden Mischung; und das Behalten der resultierenden Mischung bei einer Temperatur, die von 30 °C bis 50 °C reicht, während eines geeigneten Zeitraums;

>> g2) das Auflegen der Sol-Gel-Beschichtungszusammensetzung über den Substrat; und
>> g3) das Trocknen oder das Sintern der in Schritt g2) erhaltenen Beschichtung; und

> h) zweitens, das Auflegen von einer äußeren anti-reflektierenden Lage über die innere Lage auf dem Substrat mittels eines Verfahrens, das folgendes umfasst:

>> h1) das Auflegen von der anti-reflektierenden Sol-Gel-Beschichtungszusammensetzung wie in Anspruch 9 definiert oder, ersatzweise, der anti-reflektierenden wasserabweisenden Sol-Gel-Beschichtungszusammensetzung wie in Anspruch 10 definiert, über die innere Lage auf dem Substrat;

h2) das Sintern der in Schritt h1) erhaltenen Beschichtung; und wahlweise;

wobei das Verfahren weiterhin einen zusätzlichen Schritt i) nach dem Schritt h) umfasst; oder ersatzweise wobei das Verfahren weiterhin den zusätzlichen Schritt ii) nach dem Schritt h) umfasst; oder ersatzweise wobei das Verfahren weiterhin den zusätzlichen Schritt i) nach dem Schritt h), gefolgt von dem Schritt ii) umfasst; oder ersatzweise

wobei das Verfahren weiterhin den zusätzlichen Schritt ii) nach dem Schritt h), gefolgt von dem Schritt i) umfasst; wobei:

der Schritt i) das Auflegen von einer oder mehreren zusätzlichen Beschichtungen über die äußere Beschichtung des Substrats umfasst; und

der Schritt ii) die Oberflächenfunktionalisierung der äußeren Beschichtung des Substrats umfasst.

13. Das Verfahren nach einem der Ansprüche 11-12, wobei die Schritte des Auflegens durch das Tauchen des Substrats in die Beschichtungszusammensetzung bei einer Auflagesgeschwindigkeit von 2 cm/min bis 40 cm/min durchgeführt werden; und wobei die Schritte des Sinterns bei einer Temperatur reichend von 200 °C bis 700 °C während eines geeigneten Zeitraums durchgeführt werden.

14. Eine einzige anti-reflektierende Beschichtung auf einem Substrat oder ein anti-reflektierender Multilagestapel auf einem Substrat, die bzw. der mittels des Verfahrens wie in einem der Ansprüche 11-13 definiert erhalten werden kann.

15. Die einzige anti-reflektierende Beschichtung auf einem Substrat nach Anspruch 14, wobei die Monolagebeschichtung eine Dicke hat, die von 100 nm bis 140 nm reicht und einen Brechungsindex hat, der von 1,20 bis 1,26 bei einer Wellenlänge von 700 nm reicht, welche mittels des Verfahrens wie in Anspruch 11 definiert erhalten werden kann, wobei das hydrolysierbare Siliciumalkoxid Tetraethylorthosilicat (TEOS) ist, der ($C_1$-$C_8$)-Alkohol Ethanol ist, der saure Katalysator eine wässrige saure Lösung von HCl ist, und der Tensid der Formel (II) Polyethylen-(20)-oxidhexadecylether ist; oder ersatzweise

der anti-reflektierende Multilagestapel auf einem Substrat nach Anspruch 14, welcher ein anti-reflektierender zweilagiger Stapel ist, wobei die äußere Lage des Stapels eine Dicke hat, die von 100 nm bis 140 nm reicht und einen Brechungsindex hat, der von 1,20 bis 1,26 bei einer Wellenlänge von 700 nm reicht; und wobei die innere Lage des Stapels eine Dicke hat, die von 95 nm bis 150 nm reicht und einen Brechungsindex hat, der von 1,42 bis 1,48 bei einer Wellenlänge von 700 nm reicht, welcher mittels des Verfahrens wie in Anspruch 12 definiert erhalten werden kann, wobei das hydrolysierbare Siliciumalkoxid Tetraethylorthosilicat (TEOS) ist, der ($C_1$-$C_8$)-Alkohol Ethanol ist, der saure Katalysator eine wässrige saure Lösung von HCl ist, und der Tensid der Formel (II) Polyethylen-(20)-oxidhexadecylether ist.

## Revendications

1. Un procédé de préparation d'une composition de revêtement de sol-gel antiréfléchissante comprenant :

a) premièrement, mélanger un alcoxyde de silicium hydrolysable, un ou plusieurs alcools en ($C_1$-$C_8$), une solution aqueuse d'au moins un catalyseur acide ; et un ou plusieurs tensioactifs de formule (II) :

$$HO(CH_2CH_2O)_mR^9 \qquad (II)$$

puis, maintenir le mélange résultant à une température allant de 50 °C à 120 °C pendant une période de temps appropriée ; et finalement refroidir le mélange jusqu'à ce qu'il atteigne une température allant de 30 °C à 50 °C, dans lequel :

$R^9$ est alkyle en ($C_1$-$C_{30}$), et m est un nombre entier choisi de 2 à 40 ; la concentration du tensioactif de formule (II) dans le premier mélange résultant est comprise de 150 g/L à 300 g/L ; le rapport molaire de l'alcoxyde de silicium hydrolysable à la solution aqueuse de catalyseur acide est compris de 0,15 à 1 ; et le rapport molaire de l'alcoxyde de silicium hydrolysable à l'alcool en ($C_1$-$C_8$) est compris de 0,15 à 0,30, et le rapport molaire de l'alcoxyde de silicium hydrolysable au tensioactif de formule (II) est compris de 7 à 11,5 ;

b) préparer un second mélange en mélangeant un ou plusieurs alcools en ($C_1$-$C_8$), et une solution aqueuse d'au moins un catalyseur acide ; et maintenir le mélange résultant à une température allant de 15 °C à 30 °C ;

c) ajouter le second mélange obtenu dans l'étape b) au mélange résultant de l'étape a) ; et maintenir le mélange résultant à une température allant de 30 °C à 50 °C pendant une période de temps appropriée ; et

d) refroidir le mélange résultant obtenu dans l'étape c) jusqu'à ce qu'il atteigne une température allant de 15 °C à 30 °C ; et ajouter un ou plusieurs alcools en $(C_1-C_8)$ jusqu'à ce que le rapport molaire de l'alcoxyde de silicium hydrolysable à l'alcool en $(C_1-C_8)$ dans la composition de revêtement de sol-gel antiréfléchissante soit compris de 0,025 à 0,100

dans lequel :

la concentration du tensioactif de formule (II) dans la composition de revêtement de sol-gel antiréfléchissante est comprise de 55 g/L à 90 g/L, le rapport molaire de l'alcoxyde de silicium hydrolysable à la solution aqueuse d'au moins un catalyseur acide est compris de 0,050 à 0,350, et le rapport molaire de l'alcoxyde de silicium hydrolysable au tensioactif de formule (II) est compris de 7 à 11,5.

2. Le procédé selon la revendication 1, dans lequel le tensioactif de formule (II) est l'hexadécyléther de poly(oxyde d'éthylène) (20).

3. Le procédé selon l'une quelconque des revendications 1-2, dans lequel l'alcoxyde de silicium hydrolysable est choisi dans le groupe constitué de :

   i) un alcoxyde de silicium entièrement hydrolysable de formule (IA)

   $$Si(OR^1)(OR^2)(OR^3)(OR^4) \qquad (IA)$$

   ii) un alkylalcoxyde ayant au moins un substituant non hydrolysable, étant le substituant non hydrolysable un alkyle en $(C_1-C_4)$ substitué ou non substitué de formule (IB)

   $$R^8\text{-}Si(OR^5)(OR^6)(OR^7) \qquad (IB)$$

   et iii) un mélange d'au moins un alcoxyde de silicium entièrement hydrolysable (IA) et au moins un alkylalcoxyde ayant au moins un substituant non hydrolysable, le substituant no hydrolysable étant un alkyle en $(C_1-C_4)$ substitué ou non substitué de formule (IB) ; dans lequel : chacun parmi $R^1$, $R^2$, $R^3$, $R^4$, $R^5$, $R^6$ et $R^7$ est indépendamment choisi dans le groupe constitué d'un groupe alkyle en $(C_1-C_{14})$, aryle en $(C_5-C_6)$, alcényle en $(C_2-C_{14})$ et alcynyle en $(C_2-C_{14})$ substitué ou non substitué ; et $R^8$ est un alkyle en $(C_1-C_4)$ substitué ou non substitué.

4. Le procédé selon l'une quelconque des revendications 1-3, dans lequel la solution aqueuse de l'au moins un catalyseur acide est une solution aqueuse d'un acide inorganique choisi dans le groupe constitué de $H_2SO_4$, HCl, $HNO_3$, et des mélanges de ceux-ci ayant un pH inférieur à 5.

5. Le procédé selon l'une quelconque des revendications 1-4, dans lequel l'alcool en $(C_1-C_8)$ est choisi dans le groupe constitué d'éthanol, butanol, propanol et des mélanges de ceux-ci.

6. Le procédé selon l'une quelconque des revendications 1-5, dans lequel le rapport molaire de l'alcoxyde de silicium hydrolysable, à la solution aqueuse d'au moins un catalyseur acide, à l'alcool en $(C_1-C_8)$ et au tensioactif de formule (II) dans le mélange résultant de l'étape a) est 1:8:24,4:0,12.

7. Le procédé selon l'une quelconque des revendications 1-6, dans lequel le procédé de préparation de la composition de revêtement de sol-gel antiréfléchissante comprend en outre ajouter un précurseur de silicium ayant au moins un substituant non hydrolysable lié à l'atome de silicium au mélange initial de l'étape a).

8. Le procédé selon la revendication 7, dans lequel le précurseur de silicium ayant au moins un substituant non hydrolysable lié à l'atome de silicium est un composé de formule (III) :

   $$[CF_3\text{-}(CF_2)_n(CH_2)_m]_a\text{-}Si(OR^{10})_b \qquad (III)$$

   où chaque $R^{10}$ est choisi indépendamment dans le groupe constitué d'alkyle en $(C_1-C_{20})$, alcényle en $(C_2-C_{20})$ et alkyle en $(C_2-C_{20})$-CH=CH- ; m et n sont indépendamment un nombre entier allant de 0 à 20, a est un nombre entier choisi parmi 1, 2 et 3 ; b est un nombre entier choisi parmi 1, 2, et 3 ; la somme de a+b est 4 ; ou alternativement un composé de formule (IV) :

$$[CF_3-(CF_2)_n(CH_2)_m]_a-SiX_b \qquad (IV)$$

où chaque X est un halogène choisi indépendamment dans le groupe constitué de chlore, brome et iode ; m et n sont indépendamment un nombre entier allant de 0 à 20, a est un nombre entier choisi parmi 1, 2 et 3 ; b est un nombre entier choisi parmi 1, 2, et 3 ; la somme de a+b est 4 ; ou alternativement
un composé de formule (V)

$$(R^{11})_aSi(OR^{12})_b \qquad (V)$$

où chaque $R^{11}$ et chaque $R^{12}$ est choisi indépendamment dans le groupe constitué d'alkyle en $(C_1-C_{20})$, alcényle en $(C_2-C_{20})$ et alkyle en $(C_2-C_{20})$-CH=CH- ; a est un nombre entier choisi parmi 1, 2 et 3 ; b est un nombre entier choisi parmi 1, 2, et 3 ; la somme de a+b est 4 ; ou alternativement
un composé de formule (VI)

$$[CH_3-(CH_2)_m]_a-SiX_b \qquad (VI)$$

où chaque X est un halogène choisi indépendamment dans le groupe constitué de chlore, brome et iode ; m est un nombre entier allant de 0 à 20, a est un nombre entier choisi parmi 1, 2 et 3 ; b est un nombre entier choisi parmi 1, 2, et 3 ; la somme de a+b est 4.

9.  Une composition de revêtement de sol-gel antiréfléchissante qui peut être obtenue par le procédé tel que défini dans l'une quelconque des revendications 1-6.

10. Une composition de revêtement de sol-gel hydrofuge antiréfléchissante qui peut être obtenue par le procédé tel que défini dans l'une quelconque des revendications 7-8.

11. Un procédé de préparation d'un revêtement antiréfléchissant unique sur un substrat qui comprend :

    e) déposer une mono-couche de la composition de revêtement de sol-gel antiréfléchissante telle que définie dans la revendication 9 ou, alternativement, de la composition de revêtement de sol-gel hydrofuge antiréfléchissante telle que définie dans la revendication 10 au-dessus du substrat ; et
    f) fritter le revêtement obtenu dans l'étape e) ; et facultativement où
    le procédé comprend en outre l'étape additionnelle i) après l'étape f) ; ou, alternativement le procédé comprend en outre l'étape additionnelle ii) après l'étape f) ; ou, alternativement le procédé comprend en outre l'étape additionnelle i) après l'étape f) suivie par l'étape ii) ; ou, alternativement le procédé comprend en outre l'étape additionnelle ii) après l'étape f) suivie par l'étape i) ;
    dans lequel :

    l'étape i) comprend déposer un ou plusieurs revêtements additionnels au-dessus du revêtement extérieur du substrat ; et
    l'étape ii) comprend la fonctionnalisation de surface du revêtement extérieur du substrat.

12. Un procédé de préparation d'une pile à plusieurs couches antiréfléchissante sur un substrat qui comprend:

    g) premièrement, déposer une première couche intérieure au-dessus du substrat moyennant un procédé qui comprend :

    g1) fournir une composition de revêtement de sol-gel qui peut être obtenue moyennant un procédé qui comprend :

    g1a) premièrement mélanger un alcoxyde de silicium hydrolysable, un ou plusieurs alcools en $(C_1-C_8)$, et une solution aqueuse d'au moins un catalyseur acide ; et puis maintenir le mélange résultant à une température allant de 50 °C à 70 °C pendant une période de temps appropriée ; et finalement refroidir le mélange jusqu'à ce qu'il atteigne une température allant de 30 °C à 50 °C.
    g1b) préparer un second mélange en mélangeant un ou plusieurs alcools en $(C_1-C_8)$, et une solution aqueuse d'au moins un catalyseur acide ; et maintenir le mélange résultant à une température allant de 15 °C à 30 °C pendant une période de temps appropriée ;
    g1c) ajouter le second mélange obtenu dans l'étape g1b) au mélange résultant de l'étape g1a) ; et maintenir le mélange résultant à une température comprise de 30 °C à 50 °C pendant une période de temps appropriée ;

g2) déposer la composition de revêtement de sol-gel au-dessus du substrat ; et
g3) sécher ou fritter le revêtement obtenu dans l'étape g2) ; et

h) deuxièmement, déposer une couche antiréfléchissante extérieure au-dessus de la couche intérieure sur le substrat, moyennant un procédé qui comprend :

h1) déposer la composition de revêtement de sol-gel antiréfléchissante telle que définie dans la revendication 9 ou, alternativement, la composition de revêtement de sol-gel hydrofuge antiréfléchissante telle que définie dans la revendication 10, au-dessus de la couche intérieure sur le substrat ;
h2) fritter le revêtement obtenu dans l'étape h1) ; et facultativement où ;
le procédé comprend en outre une étape additionnelle i) après l'étape h) ; ou, alternativement
le procédé comprend en outre l'étape additionnelle ii) après l'étape h) ; ou, alternativement
le procédé comprend en outre l'étape additionnelle i) après l'étape h) suivie par l'étape ii) ; ou, alternativement
le procédé comprend en outre l'étape additionnelle ii) après l'étape h) suivie par l'étape i) ; dans lequel :

l'étape i) comprend déposer un ou plusieurs revêtements additionnels au-dessus du revêtement extérieur du substrat ; et
l'étape ii) comprend la fonctionnalisation de surface du revêtement extérieur du substrat.

13. Le procédé selon l'une quelconque des revendications 11-12, dans lequel les étapes de déposition sont effectuées par trempage du substrat dans la composition de revêtement à une vitesse de déposition allant de 2 cm/min à 40 cm/min ; et les étapes de frittage sont effectuées à une température allant de 200 °C à 700 °C pendant une période de temps appropriée.

14. Un revêtement antiréfléchissant unique sur un substrat ou une pile à plusieurs couches antiréfléchissante sur un substrat qui peut être obtenu(e) moyennant le procédé tel que défini dans l'une quelconque des revendications 11-13.

15. Le revêtement antiréfléchissant unique sur un substrat selon la revendication 14, dans lequel le revêtement monocouche a une épaisseur allant de 100 nm à 140 nm et un indice de réfraction allant de 1,20 à 1,26 à une longueur d'onde de 700 nm, qui peut être obtenu moyennant le procédé tel que défini dans la revendication 11, dans lequel l'alcoxyde de silicium hydrolysable est le tétraéthylorthosilicate (TEOS), l'alcool en ($C_1$-$C_8$) est l'éthanol, le catalyseur acide est une solution acide aqueuse de HCl, et le tensioactif de formule (II) est l'hexadécyléther de poly(oxyde d'éthylène) (20) ; ou, alternativement
la pile à plusieurs couches antiréfléchissante sur un substrat selon la revendication 14, qui est une pile bicouche antiréfléchissante, où la couche extérieure de la pile a une épaisseur allant de 100 nm à 140 nm et un indice de réfraction allant de 1,20 à 1,26 à une longueur d'onde de 700 nm ; et la couche intérieure de la pile a une épaisseur allant de 95 nm à 150 nm et un indice de réfraction allant de 1,42 à 1,48 à une longueur d'onde de 700 nm, qui peut être obtenue moyennant le procédé tel que défini dans la revendication 12, où l'alcoxyde de silicium hydrolysable est le tétraéthylorthosilicate (TEOS), l'alcool en ($C_1$-$C_8$) est l'éthanol, le catalyseur acide est une solution acide aqueuse de HCl, et le tensioactif de formule (II) est l'hexadécyléther de poly(oxyde d'éthylène) (20).

**Fig. 1**

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 17382016
- WO 2011018590 A
- US 2008311390 A